# EUROPÄISCHE PATENTSCHRIFT

(11) **EP 2 850 272 B1**
(45) Veröffentlichungstag und Bekanntmachung des Hinweises auf die Patenterteilung: **02.11.2016**
(21) Anmeldenummer: 13736957.5
(22) Anmeldetag: 14.05.2013
(51) Int. Cl.: E06B 7/02, F24F 12/00

(54) **RAHMENLUEFTUNGSGERAET, FENSTERANORDNUNG UND EINGEBAUTES FENSTER MIT LÜFTUNGSGERAET ZUM LUEFTEN UND ZUM ERHALT DER REGULAEREN VERGLASUNGSGROESSE UND AUCH RAHMENABMESSUNGEN**
FRAME VENTILATION DEVICE, WINDOW ARRANGEMENT AND INSTALLATION WINDOW WITH A VENTILATION DEVICE FOR VENTILATING AND FOR MAINTAINING CONVENTIONAL GLAZING DIMENSIONS AND ALSO FRAME DIMENSIONS
APPAREIL DE VENTILATION DE CADRE, AGENCEMENT DE FENÊTRE ET FENÊTRE ENCASTRÉE DOTÉE D'UN APPAREIL SERVANT À LA VENTILATION ET PERMETTANT DE CONSERVER LA TAILLE NORMALE D'UN VITRAGE ET LES DIMENSIONS DU CADRE

(30) Priorität: 14.05.2012 DE 102012104198
(43) Veröffentlichungstag der Anmeldung: 25.03.2015
(73) Patentinhaber: Hautau GmbH, 31691 Helpsen (DE)
(72) Erfinder: WUESTEFELD, Wolfgang, 30974 Wennigsen (DE); FAATZ, Stefan, 32549 Bad Oeynhausen (DE)
(74) Vertreter: Dantz, Jan Henning
(86) Internationale Anmeldenummer: PCT/IB2013/053939
(87) Internationale Veröffentlichungsnummer: WO 2013/171677

(56) Entgegenhaltungen:
- EP-B1- 1 690 045
- WO-A1-2011/105969

## Beschreibung

Die Erfindung betrifft ein Rahmenlüftungsgerät mit dem eine Reihe von Schwierigkeiten behoben werden, die im Stand der Technik angelegt sind. Das Rahmen-Lüftungsgerät (RLG) besitzt ein Gehäuse mit zumindest einem ersten und einem zweiten Lüfter und zwei Öffnungen für ein Ausströmen und zwei Öffnungen für ein Einströmen von Luft, um einen Luftaustausch - im Grunde eine Zirkulation - zu ermöglichen, zwischen einem freien Außenraum (mit Wetterabhängigkeit) und einem geschlossenen, oder weitgehend geschlossenen Innenraum (mit klimatisierter, weitgehend konstanter Temperatur).

Aufgaben, die früher durch Öffnen des Fensters vorgenommen wurden oder über eine separate Lüftungseinrichtung mit Lüftungsröhren für Luft und Austrittsöffnungen im Raum und zentralen Klimatisierungsgeräten, werden zunehmend in den Bereich des Fensters oder der Fenstertür oder der Tür in einem Raum verlagert, und dabei so platziert, dass das Mauerwerk oder die Wand wenig berührt werden soll. Es wird das Fensterprofil verwendet und dabei insbesondere der Rahmen, in den ein Lüftungsgerät eingebaut wird. Es ergeben sich eine Ausströmöffnung für Innen und Außen, und es gibt eine Vielzahl von Varianten, die ausströmende Luft aus dem Raum und die einströmende Luft in den Raum relativ zueinander zu führen, um einen Feuchtigkeitsaustausch oder einen Wärmeaustausch (zur Energieerhaltung) zu ermöglichen. Auch intermittierende Führungsrichtungen der Luft im gleichen Kanal sind möglich, eine Zeit lang nach außen und eine Zeit lang nach innen, auf dem gleichen Strömungsweg.

Oft ist es so, dass eine Vergrößerung des Rahmens den bewegbaren Flügel in der Größe reduziert, so dass das Fenster, also die Lichtöffnung des Fensters, der Türe oder der Fenstertür reduziert wird. Oft ist es auch so, dass unterhalb des Rahmens das Mauerwerk aufgeschlagen wird, um dort ein Lüftungsgerät zu platzieren. Soll das vermieden werden, kann das Lüftungsgerät auch unter dem oberen Rand der Fensteröffnung (in der Mauer) platziert werden. Dann wird allerdings ein flächenmäßig kleineres Fenster zu platzieren sein, welches erneut die Lichtfläche des Fensters, der Fenstertür oder der verglasten Tür reduziert.

Die WO2011/105969 offenbart ein Lüftungsgerät für ein Fenster, das an dem Rahmen montiert ist. Das Lüftungsgerät weist an der Außenseite und der Innenseite Strömungsöffnungen auf, um Luft über einen Wärmetauscher von außen nach innen und von innen nach außen im Gegenstrom strömen zu lassen.

In der EP 1 690 045 wird eine Lüftungsvorrichtung für ein Fenster offenbart, die unter einer Fensterbank angeordnet ist. Über zwei Lüfter wird von außen und innen Luft angesaugt und über einen Wärmetauscher geleitet.

Mit der DE 202011104662 U1 (Lunos) ist eine Lüftungsanordnung bekannt geworden, die als "Einbauprofil" beschrieben wird. Dieses lüftende Einbauprofil eignet sich zum Anbau an ein Wandsystem in einer Gebäudewand. Kern und Herzstück dieses langgestreckten, vierkant-profilierten Gebildes als Einbauprofil ist ein Wärmetauschermaterial (dort 230, Seite 5, Absätze [044], [045]), durch das abwechselnd Luft in beiden Richtungen von gesteuerten Lüftern bewegt wird, welche Luft an Ausström/Einströmöffnungen ausströmt/einströmt. Die Öffnungen sind gegeneinander gerichtet, nach außen und nach innen, mit Blick auf die Wand, in die das Lüftungsgerät eingebaut ist. Besonders die dortige Fig. 6 zeigt den Einbau nahe eines Rahmens, besser gesprochen unterhalb eines Rahmens eines Flügels, dort Absatz [056], [057]. Hierbei wird ein Adapterprofil unter das Fenster gesetzt, so dass schlussfolgernd das Fenster etwas kleiner werden wird. In den Fensterrahmen platzieren die dortigen Figuren 7, 8 das Einbauprofil, jeweils horizontal, und in den Fensterrahmen nach der dortigen Figur 9 und dem dortigen Absatz [060] wird das Einbauprofil mit dem Lüfter in den vertikalen Rahmen (den Flügelrahmen) platziert.

Die beanspruchte Erfindung wendet sich von diesen Vorschlägen ab.

Die hier vorgestellte Erfindung, die naturgemäß auch beansprucht ist, soll das Fenster (die Fenstertür oder die verglaste Tür) nicht verändern. Der Rahmen soll gleich bleiben, der Flügel (der bewegbare Flügel, relativ zum Rahmen) soll ebenfalls erhalten bleiben und damit soll die Lichtöffnung, die durch Glas verschlossen ist, nicht reduziert werden. Gleichzeitig soll das Lüftungsgerät aber verdeckt arbeiten und nicht gesondert hervorstehen, zumindest nicht evident ersichtlich.

Die Rahmen-Außenmasse des Fensters sind also zu erhalten und es ist ein verdeckter Einbau gefordert, als Gesamtproblemstellung und gesuchtes Leistungsergebnis der beanspruchten Erfindung. Es soll ebenso für alle verfügbaren Arten von Rahmen einsetzbar sein (Holz, Metall, Kunststoff) und sich automatisch an eine jeweilige Eigenart der verwendeten Rahmenart anpassen.

Die beanspruchte Erfindung gemäß Anspruch 1 oder 10 löst diese Aufgabe.

Eine Verlegung in die Mauer (Laibung) wird vom Rahmen-Lüftungsgerät vorgeschlagen, aber es wird nicht in Richtung der Ebene des Fensters an den Rahmen angelegt, sondern senkrecht zu dieser Fensterebene, die durch den Rahmen und den geschlossenen Flügel abgebildet wird.

Senkrecht zu dieser Ebene erstreckt sich die eine Haupt-Erstreckungsrichtung des Rahmen-Lüftungsgeräts. Auch wenn es als Rahmen-Lüftungsgerät benannt wird, ist es nicht in den Rahmen eingebaut, sondern an den Rahmen (von außerhalb des Rahmens) angelegt oder angefügt (angedockt), insbesondere auch zusätzlich daran mechanisch befestigt, wodurch das Rahmen-Lüftungsgerät zumindest einen Streifenbereich besitzt, der an der nach außen weisenden Stirnfläche des (äußeren) Rahmens des Fensters, der Fenstertür oder der Tür anliegt. Dadurch ergibt sich die erwähnte Verlagerung an die Seite und in die Mauer (Laibung) des zu montierenden Fensters.

Die seitliche Verlagerung und das Herausreichen nach außen (Außenraum) ist hier von Vorteil, weil die Abflussrichtung von eventuellem Kondenswasser auf der Außenseite des Gebäudes so abfließen kann, dass ein entweder vorhandenes oder zusätzlich angebautes Hohlprofil (auf der Außenseite) das durch Wärmetausch entstehende Wasser (Kondenswasser) so führen kann, dass es auf dem Sims (außen) auflaufen oder abtropfen kann. Eine gesonderte Bahnführung und eine gesonderte Beachtung, wo dieses Kondenswasser, das beim Wärmetausch entsteht, geführt werden muss, braucht dadurch nicht zu erfolgen. Die Entwässerung des Kondensats erfolgt auf die Fensterbank, ein zusätzliches Leistungsergebnis oder - anders gesprochen - eine zu lösende technische Aufgabe ist erfüllt.

Aufgrund der Konstruktion des Aufbaus des Rahmen-Lüftungsgeräts ist es nachrüstfähig. Es ist nicht direkt aus der Fassade austretend (vorstehend), sondern gegenüber der Fassadenfläche (außen) nach Innen verlagert, so dass die optische Außenansicht der Fassade nicht durch Wasserablauf, Schmutzablauf oder "Rotznasen", die sich durch laufend und langfristig ablaufendes schmutziges Wasser ergeben, geschädigt oder in ihrem Ansehen beeinträchtigt wird.

Die Raumzuluft und die Raum-Abluft (richtungsorientiert gesehen) werden seitlich an dem Blendrahmen (dem Festrahmen) vorbeigeleitet (zugeführt oder abgeführt). Sie werden durch die Fensterwand geleitet, wobei eine Ausnehmung in der Wand (auch: Laibung) von dem Rahmen-Lüftungsgerät, das mit einem Streifenbereich an der Außenseite des Festrahmens anliegt, eingenommen ist.

Erfolgt die Luftführung seitlich durch das Lüftungsgerät und somit seitlich am Blendrahmen vorbei, wird das Fenster in keiner Weise verändert, weder in der Größe, noch beim Umbau, noch beim Anbau an Oberflächen von Rahmen, Blendrahmen oder Flügelrahmen.

Auf der Außenseite des Fensters (also auf der einen Seite von dem Montagestreifen, der am Festrahmen anliegt) erfolgt eine Umlenkung der Lüftungsführung, in Richtung zur Scheibe, oder in einer Richtung zu einer Ebene des Fensters (geschlossener Flügelrahmen und Blendrahmen gemeinsam betrachtet). Diese Rahmenebene steht senkrecht auf dem Montagestreifen, sodass auch die Umlenkrichtung so ausgebildet ist, dass sich die Luft (auf der Außenseite) im Wesentlichen 90° zum Montagestreifen bewegt. Möchte man eine noch andere Umschreibung mit Blick auf Merkmal (a) des Anspruchs 1 wählen, so ist die Flachseite die große Seite des Lüftungsgeräts und diese bildet eine Montageebene, die senkrecht auf der Ebene des Fensters steht, und diese umgelenkte Strömungsrichtung ist senkrecht zur Flachseite oder zur Ebene der Flachseite des Rahmen-Lüftungsgeräts.

Die Anordnung ist vorteilhaft, weil sich die Fenstergröße bei einem Ersatz des alten Fensters durch ein neues Fenster mit einem angedockten Lüftungsgerät nicht verkleinert. Fenster bleibt Fenster, seine Größe bleibt gleich und das Lüftungsgerät ist seitlich vom Fenster angeordnet (an einem der vertikalen Rahmen) und in das Mauerwerk der Laibung versenkt.

Die vorzunehmende Ausnehmung in der Wand erstreckt sich nicht längs der gesamten Höhe des Fensters, sondern nimmt einen geringen Teil in der Höhe ein und auf Grund der in Tiefenrichtung schlanken Gestalt des Lüftungsgeräts auch wenig Tiefe in die Laibung (in die Wand). Die Haupterstreckung des Lüftungsgeräts ist in Längsrichtung gegeben, also in einer Richtung parallel zur Montagefläche (der Flachseite) und dem darin oder darauf vorgesehenen Montagestreifen, der dem Rahmen zugeordnet ist (Anspruch 1). Das ist die Vertikalrichtung. Die Erstreckung in Querrichtung ergibt sich aus der Stärke des Fensters und den beiden weiteren Streifen, Außen und Innen. Es ist weniger als die Stärke der Mauer.

Dadurch, dass die Umlenkung der strömenden Luft außen erfolgt, geht die Strömung durch die Längsrichtung des Lüftungsgeräts hindurch und bleibt in dieser Ebene.

Umlenkungen der Strömung können vorgenommen sein (Anspruch 5), wobei die beiden Seiten als Außenseite und Innenseite benannt werden, an denen Umlenkungen vorhanden sein können. Die Außenseite ist mit Blick auf die Seite zu sehen, die im montierten Zustand außerhalb des Fensters liegt (außen) und die Innenseite ist so zu sehen, dass sie im montierten Zustand im Raum (Innenseite oder Innen) liegt. Außerhalb des Fensters meint insoweit auf der Außenseite und Innerhalb des Fensters meint nicht innerhalb der physischen Erstreckung des Fensters, sondern auf der Raumseite des Fensters. Die Trennungsebene ist die Fensterebene, die senkrecht auf der Montagefläche des Lüftungsgeräts steht.

Der Begriff "außen" wird im Folgenden auch mit "Außenraum" benannt, und "innen" wird mit "Innenraum" benannt. Diese beiden sind relativ zu betrachten. Sie beziehen sich auf die Wand, in der das Fenster eingebaut ist. Es gibt eine Außenseite und es gibt eine Innenseite. Die Innenseite ist in der Regel die Raumseite. Der Außenraum soll auch so verstanden werden, dass er eben weiter außen liegt als der Innenraum. Beispielsweise kann es ein Innenhof sein oder ein Zwischenhof oder ein gestaffeltes Gebäude mit mehreren Wänden, sodass der hier als Außenraum benannte Ort nicht unmittelbar außerhalb des gesamten Gebäudekomplexes liegen muss, sondern nur "weiter außen" als der Innenraum. Ob das Atrium (der Innenhof) dabei überdacht ist und kein Regen ansteht, oder nicht überdacht ist, spielt für die Begriffe "innen" oder "außen" keine entscheidende Rolle.

Das beanspruchte Lüftungsgerät (Anspruch 1) hat eine Flachseite, die funktionell dreigeteilt ist. Die Zahl "drei", ist eine Mindestzahl und soll zu verstehen geben, dass zumindest drei Streifenabschnitte funktionell vorgesehen sind.

Ein erster Streifenabschnitt ist so ausgebildet, dass er als Montagestreifen an der seitlichen Stirnfläche des Fensterrahmens angedockt werden kann (Ansprüche 1, 10). Er ist dazu in Längsrichtung durchgehend, vertikal betrachtet, im montierten Zustand und in der Haupterstreckungsrichtung des Lüftungsgeräts. Er kann zum Montieren Aufnahmen oder Vorsprünge aufweisen, die entsprechende Gegenstücke am Festrahmen haben (dessen seitliche äußere, vertikal orientierte Stirnfläche).

Beiderseits des ersten genannten Funktionsstreifens sind zwei weitere (vertikale) Funktionsstreifen vorgesehen, die sich auch über die Gesamtlänge des Lüftungsgeräts, respektive der Flachseite erstrecken. Eine davon wird Innenstreifen und eine davon wird Außenstreifen benannt, nach ihrem sinngemäßen Orientierungszweck, im montierten Zustand.

Der Außenstreifen weist zwei Strömungsöffnungen auf. Diese sind Ausgangspunkt oder Endpunkt, je nach Strömungsrichtung, von zwei in dem Lüftungsgerät vorgesehenen Strömungskanälen. Es sind nicht die gleichen Strömungskanäle, sondern die zwei Strömungskanäle in dem Lüftungsgerät sind so ausgebildet, dass sie beide über einen (oder: durch einen) Wärmetauscher verlaufen. Jeder der Strömungskanäle besitzt einen elektromotorisch angetrieben Lüfter, der einen Luftstrom zu erzeugen in der Lage ist, wenn der Lüfter elektrisch angesteuert wird.

Der Außenstreifen hat eine Ausströmöffnung des einen Kanals und eine Einströmöffnung des anderen Kanals. Demzufolge sind die Strömungskanäle dazu da, die Innenluft nach außen zu transportieren und die Außenluft nach innen zu transportieren, jeweils pro Kanal, ohne Umkehr der Drehrichtung der Lüfter.

Die zwei Strömungsöffnungen können dem Außenstreifen an relativ beliebiger Stelle zugeordnet sein. Es wird günstiger sein, die ausströmende Luft (von innen nach außen) an der Strömungsöffnung austreten zu lassen, die weiter unten liegt, um näher zum Außensims zu gelangen und dort anstehendes Kondenswasser abtropfen oder abfließen zu lassen. Nachdem auf der Außenseite aber ein zusätzlicher Kanal in einem dort angeordneten Hohlprofil, beispielsweise dem Rollladenprofil als Führung des Rollladens, angeordnet sein kann, können die Positionen auch verändert werden, weil die Luftführung über den inneren Kanal dieses Außenprofil geschieht. Bevorzugt ist die von außen einströmende Luft der Strömungsöffnung zugeordnet, die weiter oben liegt.

Beide Strömungsöffnungen sind aber in dem genannten Außenprofil nicht strömungstechnisch innerhalb des Hohlprofils verbunden, sondern über eine Sperre oder Trennung strömungsmäßig blockiert, sodass kein Kurzschluss (Zirkelschluss) entstehen kann. Diese liegt positionsmäßig zwischen den beiden Öffnungen des Hohlprofils, über die eine Ankopplung der beiden äußeren Strömungsöffnungen des Lüftungsgeräts in denselben inneren Kanal des Hohlprofils erfolgt.

Im Außenprofil (Hohlprofil) sind an gewünschter Stelle die ins Freie (in den freien Außenraum) tretenden Strömungsöffnungen der beiden Kanäle (oder Richtungen) vorgesehen, die auch durch weiter führende horizontale Hohlprofilstücke in einen größeren Abstand zum Lüftungsgerät verlegt sein können.

Lüftungsgitter oder Lochplatten oder geneigte Lamellen können die Öffnungen im Außen- Hohlprofil sichtseitig abdecken.

Der innere Streifen als Innenstreifen ist ein Funktionsstreifen (Ansprüche 1, 10), dem ein Revisionszugang (schiebbare, drehbare oder abnehmbare Platte) zugeordnet sein kann.

Das Gerät kann aufgrund seiner elektrotechnischen Ausbildung im Inneren so langfristig zugänglich gehalten werden. Aufgrund der Ausbildung des Geräts ist die Platte, die als Abdeckung der Revisionsöffnung oder des Revisionszugangs vorgesehen ist, abnehmbar. Sie ist damit im eingebauten Zustand von Innen (von der Raumseite) zugänglich und eröffnet das Innere des Geräts zum Austausch der darin enthaltenen Komponenten, nicht nur zur Reparatur der Lüfter oder eventueller Elektronik, die diese Lüfter ansteuert, sondern auch zum Auswechseln des Wärmetauschers und zum Auswechseln vorhandener Filterplatten oder Filtereinsätze, die entlang der Strömungswege der Luft angeordnet sein können.

Der Innenstreifen steht zum Innenraum hin von dem Blendrahmen vor. Der Außenstreifen steht zum Außenraum von dem Blendrahmen vor (bezogen auf dessen Fensterebene).

Entlang des Innenstreifens können in einer Richtung senkrecht zur Flachseite des Gehäuses zumindest eine oder zwei Lüftungsöffnungen angeordnet sein. Diese beiden nach innen austretenden Lüftungsöffnungen können aber auch auf die Stirnseite verlegt sein, sodass der Revisionszugang eine maximale Länge (in vertikaler Höhenrichtung) aufweisen kann.

Die den Revisionszugang öffnende, abnehmbare Platte ist um ein Maß verkürzt, wenn die Lüftungsöffnungen auf dem Innenstreifen auf die Flachseite verlegt werden. Das hängt von der Anzahl und Größe der Lüftungsöffnungen zum Innenraum hin ab (Anspruch 4). Das Austreten zumindest einer Lüftungsöffnung auf der Schmalseite (Ansprüche 2, 3 und 5) ist ebenfalls möglich. Die Strömung in dem entsprechenden Innenkanal des Lüftungsgeräts wird dann auf der Innenseite (zum Innenraum hin) nicht mehr umgelenkt. Für zumindest eine oder zwei Lüftungsöffnungen auf der Flachseite ist eine Umlenkung vorzusehen, wenn sie auf dem Innenstreifen austreten.

Eine solche Umlenkung findet auch auf dem zum Außenraum liegenden Außenstreifen statt. Hier ist die Ankopplung bevorzugt ein Hohlprofil (Anspruch 8). Beide Lüftungskanäle, der, der die Luft aufnimmt und der, der die Luft abgibt (mit Blick auf den Außenraum), werden dabei um 90° umgelenkt.

Je nachdem, ob die Strömungswege für die Luft im Innern des Lüftungsgeräts so zum Wärmetauscher führen, dass dort entweder Parallel- (Gleichstrom) oder Gegenstrom oder eine mehr oder weniger orientierte Präferenz dieser beiden Strömungsverhältnisse erreicht wird, ist die Hauptorientierung des Wärmetauschers eher in Längsrichtung (eher mehr paralleler Strom) oder mehr in Querrichtung (in Q-Richtung) ausgerichtet (eher Gegenstrom), so Anspruch 6.

Wenn mehr als ein Andocken des Lüftungsgeräts gewünscht ist, kann eine zusätzliche mechanische Befestigung an dem Streifen des Blendrahmens erfolgen (Anspruch 7). Hierzu sind bevorzugt Winkelstücke vorzusehen.

Das Andocken meint also kein wirkliches Eingreifen mit einem funktionstragenden Teil oder einem funktionstragenden Strömungsabschnitt des Lüftungsgeräts in den Innenraum (die Innenabmessung) des Blendrahmens. Allerdings können Montagestellen eingreifen, also Schrauben in den Blendrahmen eingeschraubt werden, um zusätzlich zu befestigen. Es bleibt ein Andocken (Anspruch 1, Anspruch 10).

Für die zwei Strömungswege in dem Lüftungsgerät ist je ein elektromotorisch betriebener Lüfter vorgesehen (Anspruch 10). Zunächst ist der Ort, an dem der jeweilige Lüfter im Zuge eines Strömungswegs angeordnet ist, beliebig. Er unterliegt allenfalls Wartungs- und Austauschüberlegungen, wo er günstig platziert werden kann, um Zugang zu einem solchen Lüftermotor zu haben. Eine bevorzugte Platzierung der Lüftermotoren für beide Strömungswege ist dabei unterhalb des Innenstreifens, also unterhalb der abnehmbaren Platte, die den Revisionszugang öffnet, sodass Zugriff zu beiden Lüftern gegeben ist.

Beide Strömungswege sind eigenständig und verlaufen durch den im Wesentlichen zentral im Lüftungsgerät sitzenden Wärmetauscher. Hier ist bevorzugt ein Gegenstrom vorzusehen, sodass die Hauptorientierung des Wärmetauschers in Querrichtung zeigt, also eine größere Erstreckung in Querrichtung und eine kleinere Erstreckung des Wärmetauschers in vertikaler Längsrichtung (Anspruch 12).
Die vorteilhafte Zugänglichkeit über die abnehmbare Platte zur Öffnung der Revisionsöffnung kann dazu genutzt werden, alle einem Verschleiß oder einer Störung unterworfenen Komponenten auszutauschen, auszuwechseln oder für eine Reinigung zu entnehmen und wieder einzusetzen. Die beiden Lüfter, die elektromotorisch angetrieben sind, sind hierbei günstig unter der abnehmbaren Platte anzuordnen, je einer in je einem Strömungsweg (Anspruch 13).

Die diese Lüfter steuernde elektronische oder elektrische Steuerung ist hier auch günstig anzuordnen, da sie herausgenommen werden muss, wenn technische Störungen in der Ansteuerung gegeben sind oder eine Sicherung angesprochen hat, die auszuwechseln ist. Alles ist möglich, wenn die abnehmbare Platte geöffnet wird, obwohl das Lüftungsgerät mit seinem Gehäuse vollständig verdeckt und innerhalb der Wand und in dem Bereich unterhalb des Montagestreifens und unterhalb des äußeren Streifens nicht mehr senkrecht von der Flachseite her zugänglich ist.

Das eingebaute Gerät verhält sich mit der abnehmbaren Platte zur Öffnung der Revisionsöffnung unterhalb des Innenstreifens so, dass es trotz vollständig verdeckten Einbaus noch hinsichtlich sämtlicher, einem Austausch unterliegenden Komponenten zugänglich bleibt, so auch der elektrischen oder der elektronischen Steuerung (Anspruch 14).

Auch der Wärmetauscher selbst ist, obwohl er praktisch im Zentrum des Wärmetauschers liegt, also zu einem wesentlichen Anteil unterhalb des Montagestreifens und des äußeren Streifens, durch ein seitliches Herausziehen und verkippendes Herausnehmen zugänglich.

In gleicher Weise sind Filterplatten oder eingesetzte Filtereinsätze austauschbar. Einer dieser Filtereinsätze ist bevorzugt neben einem Lüfter angeordnet, ein anderer Filtereinsatz ist bevorzugt unter dem Außenstreifen angeordnet und nahe der die Luft aus dem Außenraum ansaugenden Strömungsöffnung, und wird seitlich entlang einer in Querrichtung verlaufenden Führung unter dem Montagestreifen hinweg in den äußeren Streifen hineingeschoben. Ein Herausnehmen kann über ein angeflanschtes Bändchen geschehen, ein Hereinschieben unmittelbar mit der Hand.

Bevorzugt sind beide Filter im oberen Bereich des Lüftungsgeräts angeordnet, sodass sie in gleicher horizontaler Richtung eine Führung oder Bahn verwenden können.

In abstrakter Betrachtung hat das Lüftungsgerät ein mechanisches Andocken an einen Rahmen und vier Strömungsöffnungen. Diese vier Strömungsöffnungen sind mit zwei eigenständigen Strömungskanälen verbunden. Jeweils eine äußere Strömungsöffnung ist mit einer inneren Strömungsöffnung über einen der zwei eigenständigen Strömungskanäle verbunden. Nachdem alle Strömungsöffnungen beabstandet sind, bevorzugt an den vier Ecken des Lüftungsgeräte und bevorzugt alle auf derselben Flachseite austreten, ist der größtmögliche Innenraum geschaffen, um zusätzliche Komponenten in das Lüftungsgerät einzubringen oder einzusetzen. Dazu gehört ein im Wesentlichen zentral liegender Wärmetauscher, durch den beide eigenständige Strömungskanäle verlaufen.

Soll das rein haltende Andocken weiter verstärkt werden, kann ein Winkelstück oben, insbesondere auch ein Winkelstück unten, angesetzt werden. Dies wird auf beiden seiner Schenkel verschraubt. Ein Schenkel des Winkelstücks greift an den Montagestreifen. Der andere Schenkel greift an die kurze schmale Seite des Gehäuses des Lüftungsgeräts.

Eine weitere Verstärkung des mechanischen Andockens kann über Vorsprünge und rastend aufnehmende Vertiefungen erfolgen. Diese können an dem Montagestreifen und an der Stirnfläche des Festrahmens vorgesehen sein.

Die eine oder andere Verstärkung des mechanischen Andockens kann auch kombiniert werden.

Ein Überstehen des Lüftungsgeräts zum Außenraum hin erfolgt mit dem Außenstreifen. Ein Überstehen zum Innenraum erfolgt mit dem Innenstreifen. Ein Andocken erfolgt mit dem Montagestreifen.

Das bevorzugte Verhältnis der Breite dieser drei Streifen (in Q.-Richtung, also quer zur Ebene des Fensters) ist so veranlagt, dass der größte Abschnitt oder die größte Breite der Innenstreifen ist. Dem gegenüber schmäler ist der Montagestreifen und diesem gegenüber erneut schmäler ist der nach außen ragende Streifen, der sich bevorzugt an ein außen liegendes Hohlprofil in der Breite anpasst. Eingebaut ergeben sich entsprechende Überstände.

Als eine sich ergebende variierende Breite in Q.-Richtung ist ein Innenstreifen gegeben, der bei unterschiedlichen Montageorten unterschiedlich weit vorstehen kann. Demzufolge ist eine Abdeckplatte passend zuzuschneiden, die genau diese Differenz kompensiert oder ausgleicht, wobei sie mit einer Vorderkante an den Blendrahmen anstößt.

Ist eine Lüftungsöffnung in dem Innenstreifen vorgesehen, so hat die Abdeckplatte eine entsprechende Öffnung, die mit einem Lüftungsgitter (sinngemäß verstanden) sichtseitig abgedeckt, aber strömungsdurchlässig ist.

Ein Steuergerät kann auf der Abdeckplatte angeordnet sein oder die Abdeckplatte hat eine Öffnung, um ein Steuergerät, das auf dem Innenstreifen, insbesondere der abnehmbaren Platte für die Revisionsöffnung angeordnet ist, durchgreifen zu lassen, um so zugänglich zu bleiben.

Ist der Blendrahmen anstoßend an der Abdeckplatte, ist die Möglichkeit gegeben, eine Kompensation des nach innen ragenden Überstandes vorzunehmen, und eine Vielzahl von möglichen Anbringungsorten möglich zu machen, bei Verwendung desselben Lüftungsgeräts.

Das unterstützt eine Nachrüstung dieses Lüftungsgeräts für viele Anwendungen mit der genannten Kompensationsmöglichkeit auf dem Innenstreifen.

Wendet man sich dem montierten Zustand zu, so ist eine Rahmenanordnung betroffen. Dieser Rahmen kann zu einem Fenster gehören, einer Fenstertür oder einer Tür, die mit einer Glasscheibe versehen ist. Lateral zu dieser Rahmenanordnung ist das Lüftungsgerät platziert. Es ist dabei in die Wand eingesetzt (in eine Ausnehmung) und gegenüber dem Festrahmen festgelegt. Das ist der montierte Zustand, der auch beansprucht ist.

Sinngemäß verstanden ist dieser Zustand auch der Montageplatz, einschließlich der Hauswand, in der die Rahmenanordnung eingebaut ist.

Das Gehäuse der Lüftungsanordnung hat vier beabstandete Strömungsöffnungen, die zuvor erläutert waren. Sie sind über zwei Strömungskanäle miteinander verbunden. Diese beiden Strömungskanäle sind eigenständig. Jeder dieser Strömungskanäle verläuft durch denselben Wärmetauscher und es sind elektromotorisch betriebene Lüfter vorgesehen, einer in jedem Kanal.

Das außen montierte Hohlprofil kann ein schon vorhandenes Hohlprofil sein oder ein nachträglich montiertes Hohlprofil.

Der innere Kanal des Hohlprofils übernimmt die Luftführung, bevor sie aus einem verlegten Ort aus diesem Kanal austritt, an einer Durchbrechung dieses Hohlprofils. Zwischen den beiden Strömungsöffnungen des Lüftungsgeräts ist in dem inneren Kanal des Hohlprofils ein Stopfen oder eine Strömungssperre vorgesehen, die einen Kurzschluss vermeidet.

Das nachträglich montierte Hohlprofil kann eine L-Form aus einem vertikalen und einem oben liegenden horizontalen Abschnitt oder eine ganze U-Form mit einem noch weiteren vertikalen Abschnitt auf der gegenüberliegenden Seite besitzen. Dadurch kann bevorzugt die äußere Einströmöffnung an eine andere Stelle verlegt werden, als sie von dem Lüftungsgerät vorgegeben wird. Sie liegt bevorzugt höher, als die äußere Ausströmöffnung, die möglichst tief, nahe einem Sims liegt, um Kondenswasser dorthin abzugeben.

Sind beide Strömungsöffnungen im selben vertikalen Hohlprofil zum Außenraum hin vorgesehen, können sie gleichwohl an eine andere Stelle verlegt werden, als vom Lüftungsgerät selbst vorgegeben ist, das eine nur begrenzte Höhenerstreckung in Längsrichtung aufweist.

Der Spielraum für eine Verlegung ist dabei für die Einströmöffnung (der Außenseite oder vom Außenraum her) größer als die Verlagerung der Strömungsöffnung, die ihre Luft an den Außenraum abgibt. Letztere liegt tiefer und kann damit maximal bis zur Höhe der Strömungssperre verlegt werden und minimal das untere Ende des äußeren Hohlprofils.

Bevorzugt ist je ein umlaufender Dichtstreifen vorgesehen, um jede Koppelstelle lateral, strömungsmäßig abzudichten. Die Koppelstelle ist jeweils die Ausströmöffnung bzw. Einströmöffnung des Lüftungsgeräts, hin zum äußeren vertikalen Hohlprofil.

Die in den Außenraum abgegebene Luft wird normgemäß "Fortluft" genannt. Sie hat höhenmäßig die tiefste Positionierung am unteren Rand oder Randbereich des vertikalen Hohlprofils.

Mit der Umschreibung der Positionspassung ist gemeint, dass die Durchbrechungen des äußeren Hohlprofils so gelegen sein müssen, dass sie zumindest einen Teil oder einen Abschnitt der Strömungsöffnungen im Außenstreifen des Lüftungsgeräts überdecken.

Bevorzugt sind sowohl die Positionen als auch die Größen und Formen dieser zueinander orientierten Durchbrechungen oder Öffnungen aneinander angepasst. Fertigungstechnische Toleranzen können sich indes ergeben, sodass es dabei günstiger ist, die Durchbrechungen im Außenprofil kleiner zu gestalten, damit laterale Dichtstreifen am Lüftungsgerät auf dem Außenprofil aufliegen und lateral abzudichten vermögen.

Die Hauswand, die im Zusammenhang mit der eingebauten Rahmenanordnung beansprucht ist, hat eine Laibung. Diese Laibung besitzt eine Fassade, die nach außen gerichtet ist und eine Innenwand, die nach innen zum Raum gerichtet ist. Die Hauswand kann eine Außenfassade beinhalten, also eine Außenwand sein. Dies ist sowohl absolut, wie auch relativ, weiter außen als der Innenraum zu betrachten. Die Fassade kann eine Dämmplatte aufweisen, insbesondere kann die Dämmplatte die äußerste Schicht oder Lage der Wand auf der Außenseite sein. Allenfalls mag eine Schicht von Verputzmaterialien noch auf der Dämmplatte liegen.

Besonders für verglaste Außenwände oder mit metallischen Platten (oder anderen Platten) versehene Außenwände eignet die Anordnung des seitlich am Fenster vorbeigeführten Stroms. Dies auch dann, wenn die Laibung kein Mauerwerk aufweist, wie es mit Mauerwerk der Normalfall einer Hauswand darstellt.

Zum Überstehen des Lüftungsgeräts (relativ zum Festrahmen) sind Größenverhältnisse vorgegeben. Dabei ist der nach außen reichende Überstand kleiner, als der nach innen zum Raum reichende Überstand. Der nach innen reichende Überstand wird von einer in der Breite passend zugeschnittenen Abdeckplatte abgedeckt.

Fensterprofilsysteme jeder Art, mit Profiltiefen ab 50 mm bis derzeit 100 mm können mit dieser Art der Anbringung des Lüftungsgeräts versehen werden, ohne dass an das Profil besondere Anforderungen gestellt werden.

Wird die abnehmbare Platte (Anspruch 10, letztes Merkmal) abgenommen, ist Zugriff auf das Innenleben gegeben. Zugriff ist der austauschende oder revisionierende Zugriff auf zwei elektromotorisch betriebene Ventilatoren (kurz: Lüfter), zwei Filter, eine Steuerplatine (elektrisch oder elektronisch) und ein Netzteil. Durch einfache Einschubtechnik lassen sich diese Komponenten zu Wartungszwecken oder zum Austauschen entnehmen. Das Entnehmen dieser Komponenten geschieht quer zur Fensterebene, in einer Richtung parallel zur Flachseite des Geräts, welche die drei funktionellen Streifen aufweist. Auch der im Wesentlichen im Zentrum befindliche Wärmetauscher kann durch seitliches Verschieben und Herausschwenken aus dem Gehäuse ausgebaut werden, gewartet werden und wieder, in Rückwärtsrichtung betrachtet, eingesetzt werden. Dies obschon das Gerät eigentlich verdeckt in einer Mauer und hinter dem Blendrahmen platziert ist.

Die Erfindungen werden nachfolgend anhand von Ausführungsbeispielen erläutert.

Beispiele in den Figuren beziehen sich mit dem Bezugszeichen naturgemäß auf konkret zeichnerisch dargestellte Beispiele, können Offenbarungen auslösen, können aber die beanspruchte Erfindung, die als solches von den Ansprüchen zum Schutz definiert ist, nicht einschränken, wobei die Beispiele bitte als Beispiele verstanden werden, auch ohne dass vor jedem Begriff und vor jeder Aussage ein "insbesondere" oder ein Derivat davon angegeben ist. Es sind, wie gesagt, Beispiele. Derivate von "insbesondere" sind beispielsweise, bevorzugt, z.B., zweckmäßig, in einer Ausführung, in bevorzugter Weiterbildung ... etc.

Eine zweite Anmerkung ist aktuell veranlasst, "notwendige Merkmale" ergeben sich sicherlich nicht aus der folgenden Beschreibung, sinnvolle Ergänzungen oder brauchbare Offenbarungen, im funktionstechnischen Kontext einer jeweiligen Aussage eines Absatzes, ja, aber dass diese Beispiele oder Auszüge davon "notwendig zur Festlegung der Erfindung" wären, sagt die folgende, konkrete Figurenbeschreibung nicht.

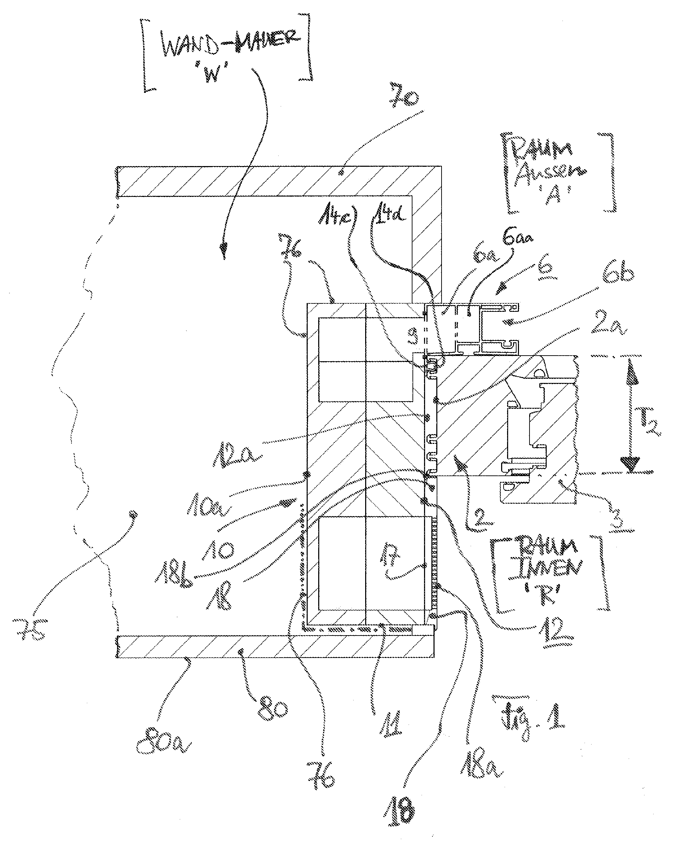

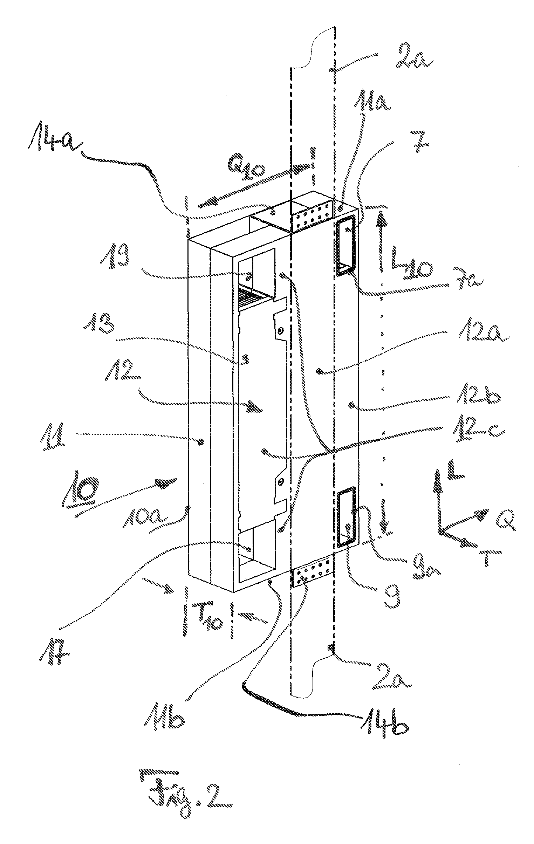

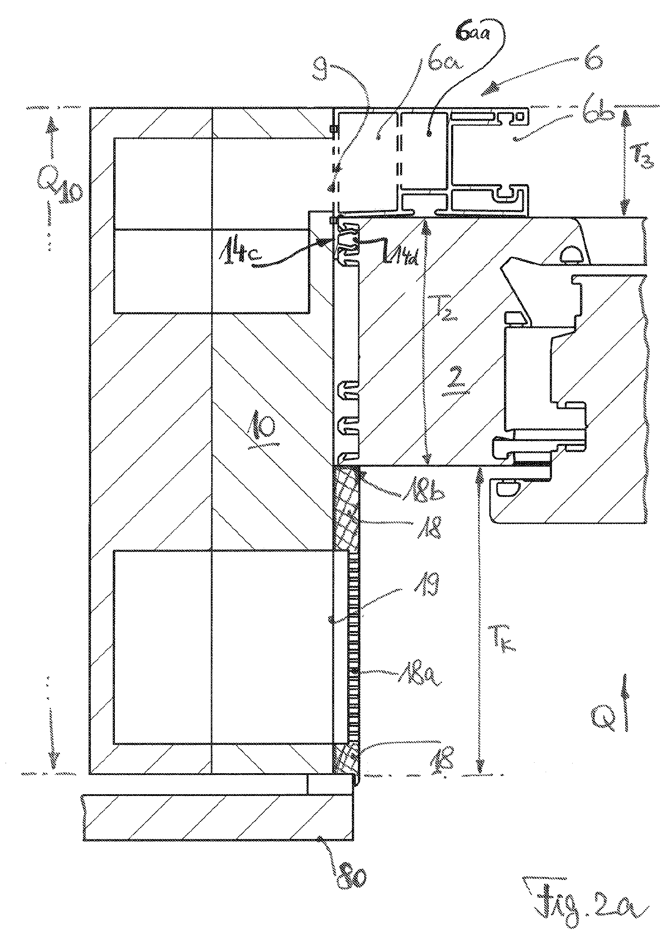

**Figur 1** veranschaulicht - im Vorgriff auf Figur 2 - einen Schnitt horizontaler Richtung, bei der das Lüftungsgerät 10 mit zwei Strömungs-Öffnungen 9,17 (Luftauslässen) zu sehen ist, eingebaut neben dem Blendrahmen 2 eines Fensters mit Blendrahmen (Festrahmen 2) und bewegbarem Flügel 3. Der Flügel kann ein Drehflügel, ein Kippflügel, ein Schiebeflügel oder ein Schwenkflügel sein, wenngleich für dieses Beispiel eine vertikale Hohlprofil-Geometrie 6 außen eingezeichnet ist, die einen nicht dargestellten Rollladen auf der Außenseite führt, die zum Außenraum A führt. Der Innenraum ist R benannt und bezieht sich auf ein Zimmer oder einen Raum innerhalb eines Gebäudes, dessen Wand 75 gezeigt ist. Die Mauer 75 ist außenseitig von einer Fassade 70 kaschiert oder bedeckt, innenseitig von einer Wandabdeckung 80. Andere Varianten werden an den folgenden Figuren erläutert. Diese erste Aussage zur Figur 1 ist für einen groben Überblick.
**Figur 2** zeigt das Lüftungsgerät 10 in einer perspektivischen Ansicht und zeigt den vertikalen Streifen 2a des Festrahmens 2, an dem das Lüftungsgerät 10 seitlich angesetzt ist. Montagehilfen sind gezeigt, mit denen das Lüftungsgerät 10 an der schmalen, seitwärts weisenden Stirnfläche 2a des Blendrahmens 2 (dessen vertikalem Holm) angedockt ist.
**Figur 1a** entspricht der Figur 1 und sämtliche dort gezeigte Bezugszeichen können hierauf übertragen werden. Mit der Figur 2a wird die Abdeckplatte 18 und ihre Funktion näher erläutert, sodass nur Bezugszeichen in diesem Bereich eingetragen sind, um die Übersichtlichkeit zu erhalten.

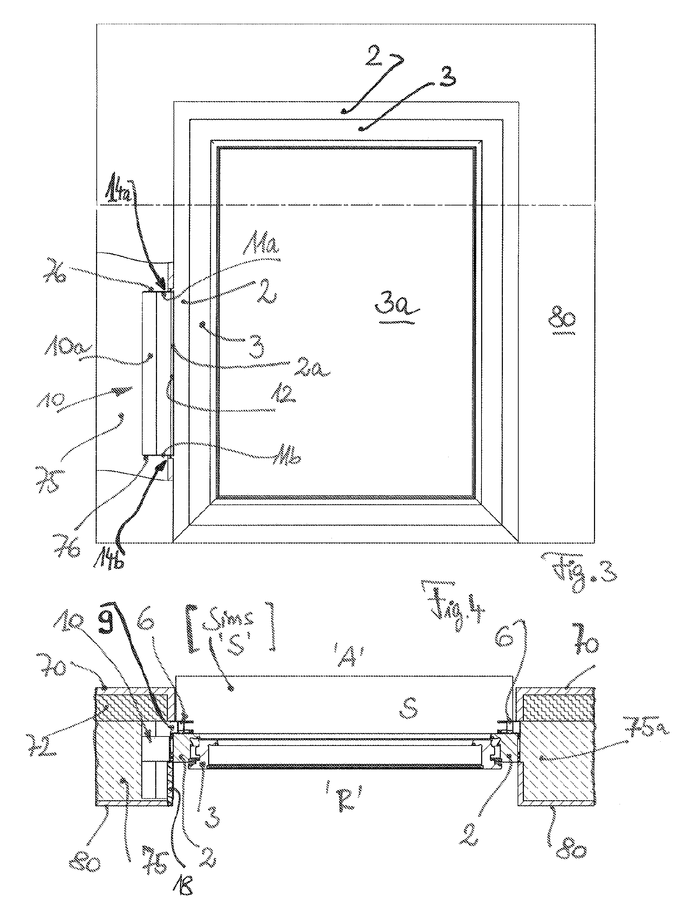

**Figur 3** veranschaulicht das Fenster mit einem Blick auf die Fensterebene (vom Innenraum R her gesehen). Die Innenwand 80 ist ebenso zu ersehen, wie links weggebrochen dargestellt das in die Laibung 75 eingesetzte Lüftungsgerät 10. Die verbindende Seite des Lüftungsgeräts als Montagestreifen 12a aus Figur 2 dockt an den auch in Figur 2 zu sehenden Streifen 2a (als laterale Stirnfläche des Blendrahmens 2) an.

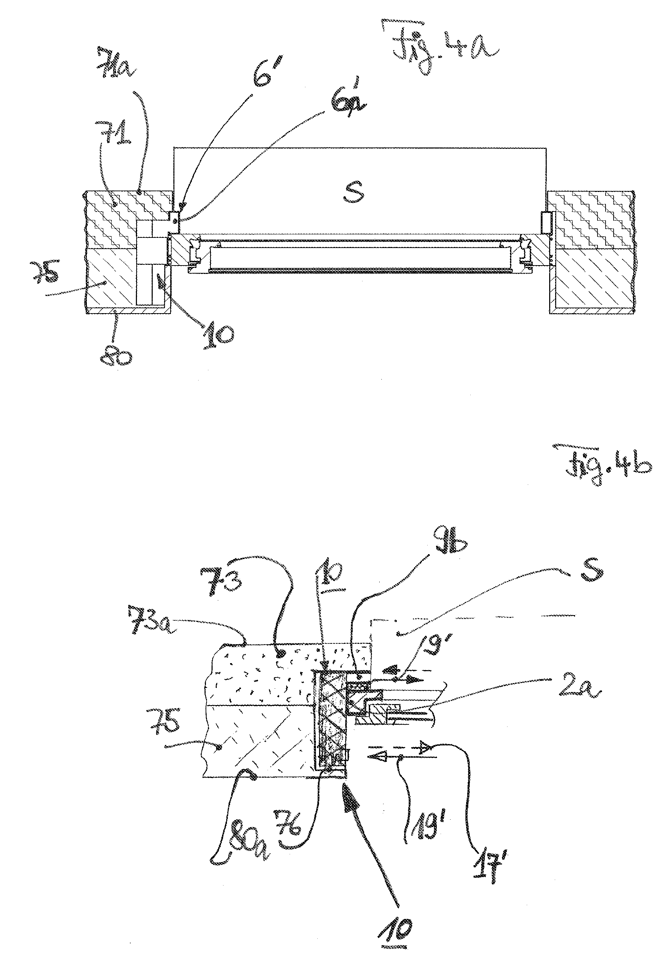

**Figur 4** ist ein Querschnitt auf der Höhe des Lüftungsgeräts 10 aus Figur 3. Erkennbar ist der Sims S. Funktionell ist das Lüftungsgerät über das vertikale Hohlprofil 6 zu dem Außenraum gekoppelt und entstehendes Kondenswasser tropft über einen Innenkanal 6a des Hohlprofils 6 auf den Sims S im Außenraum. Falls es mehr als einige Tropfen sind, kann auch ein kontinuierlicher Strom von Kondenswasser entstehen, der über den Innenkanal 6a nach unten abläuft und über das Sims umgelenkt und (regengleich) abgeleitet wird.
**Figur 4a** ist eine andere Form eines vertikalen Hohlprofils 6' und eine andere Form der Laibung 71/75.
**Figur 4b** ist eine weitere Ausbildung, bei der kein vertikales Hohlprofil vorhanden ist und deshalb Ansatzstücke 9b von Rohren (nicht dargestelltes 7b) vorgesehen sind. Die Außenfläche ist eine Dämmplatte 73, welche die Außenfassade bestimmt.

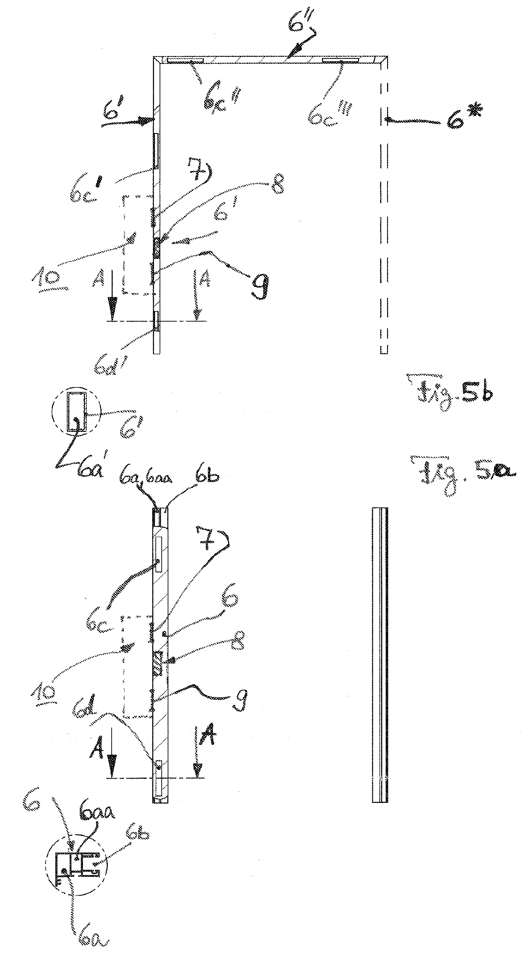

**Figur 5a** ist die in Figur 4 und Figur 1 gezeigte Variante des Hohlprofils mit einer Rollladenführung, hier in einer Ansicht von außen. Das Lüftungsgerät ist schematisch mit 10 benannt eingezeichnet.
**Figur 5b** ist eine alternative Variante eines vertikalen Hohlprofils, orientiert an der Figur 4a. Hier ist ein weiterführendes Profil zusätzlich zu dem vertikalen Abschnitt 6' vorhanden, welche eine L-Profil-Geometrie bestimmen. Wenn der rechte Arm noch vorhanden ist, ergibt sich eine umgekehrte U-Profil-Geometrie. Schematisch eingezeichnet ist das Lüftungsgerät 10 an einer Stelle am linken vertikalen Abschnitt des Hohlprofils 6'.

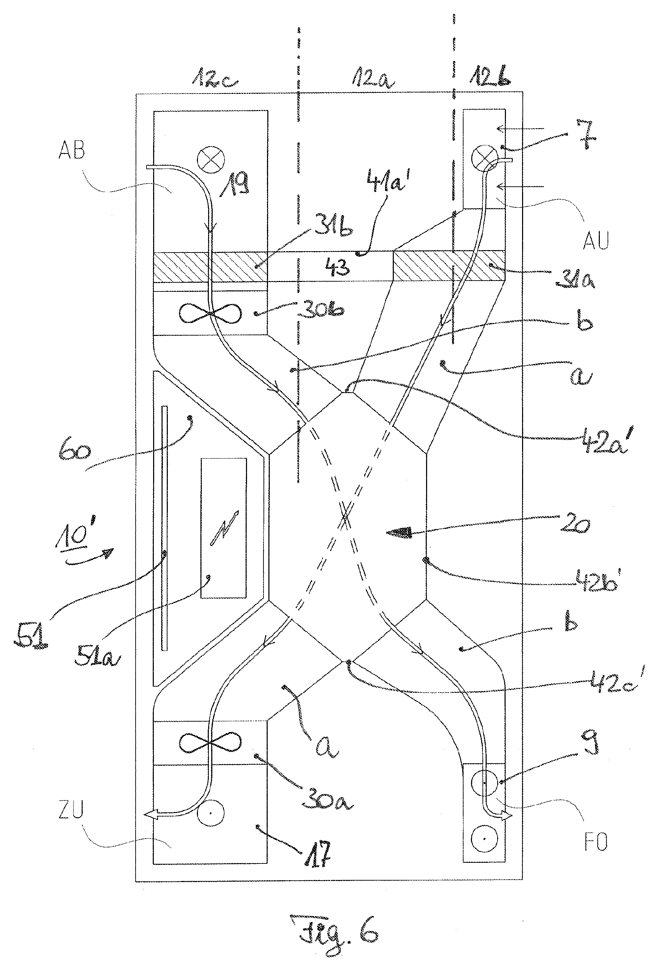

**Figur 6** verdeutlicht eine Aufsicht auf ein (ganz) geöffnetes Lüftungsgerät 10'. Es sind die zwei Strömungswege a und b der Luft zu sehen, wie auch der Innen, im Wesentlichen im Zentrum liegende Wärmetauscher 20. Zur Koordinierung mit der Figur 2 sind die beiden Austrittsöffnungen auf der Außenseite oder für den Außenraum mit 7 und 9 benannt (rechts im Bild der Figur 6).

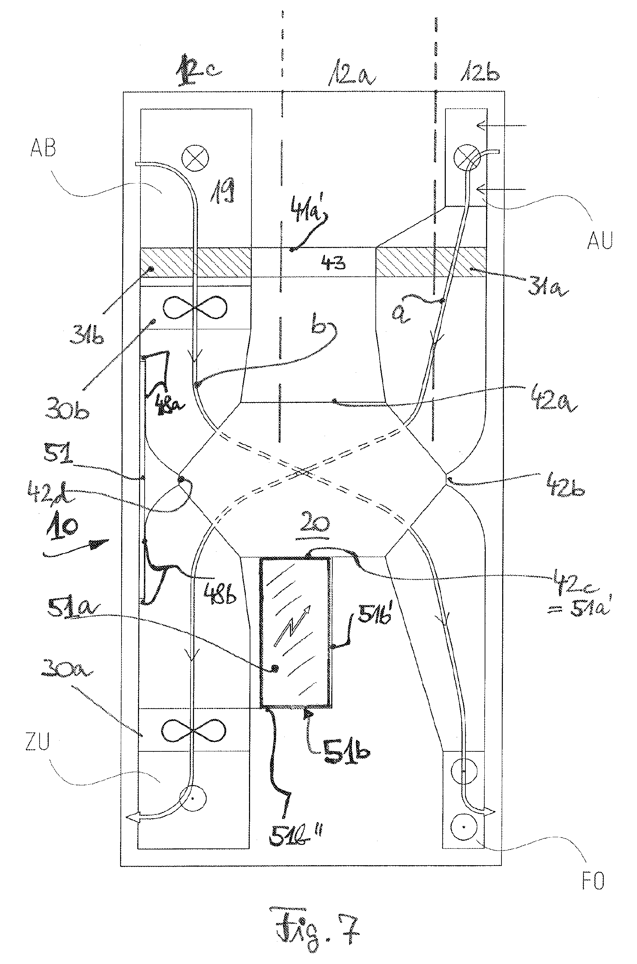

**Figur 7** ist eine alternative Gestaltung eines Lüftungsgeräts 10, bei dem beide Strömungswege a, b im Wärmetauscher 20 im Gegenstrom geführt sind. Es sind Führungen 42a, 42b zu erkennen, die den Wärmetauscher 20 beim Einsetzen zum Platzieren an seiner zentralen Lage führen und im eingesetzten Zustand dort halten.

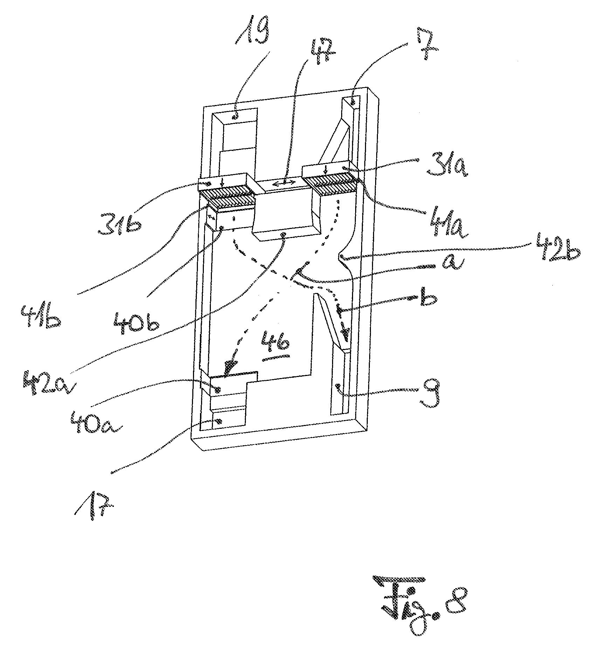

**Figur 8** ist eine perspektivische Darstellung eines geöffneten Lüftungsgeräts 10, welches demjenigen der Figur 7 entspricht. Es sind nur wenige innere Komponenten eingesetzt, hier zwei Filtereinsätze 31b und 31a, wobei je ein Filter in einem Strömungsweg a, b angeordnet ist. Dazu sind Führungen vorgesehen, wie auch für die elektrisch betriebenen Lüfter, die mit 30a und 30b aus den Figuren 6 und 7 auch für die Figur 8 zu platzieren sind, nur sind hier ihre Aufnahmen 40b, 40a mit ihren Führungen und offenen Vertiefungen gezeigt, um den Lüfter austauschbar zu machen, einerseits einsetzen zu können und am Ort des Einsatzes platziert zu halten, beim Herausnehmen zu führen und damit die elektrischen Komponenten austauschbar zu gestalten. Dies betrifft die Wartungs- und Servicefreundlichkeit des Lüftungsgeräts, ein wesentlicher Aspekt, der bei einem elektrisch betriebenen Gerät mit Komponenten, die im Betrieb abnutzen oder verbrauchen, unbedingt von Vorteil sind.

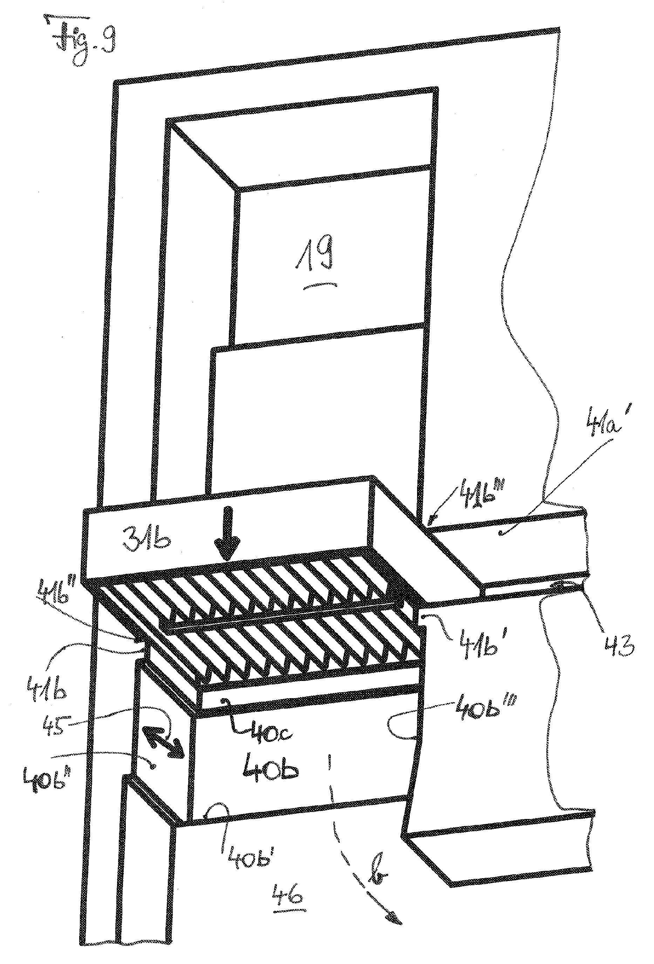

**Figur 9** ist ein Ausschnitt aus der Figur 8.

Ein grobes Konzept zum Verständnis der Einbaulage ist bereits bei der Übersicht der Figuren vermittelt worden. Hierzu ist bestmöglich die Figur 2 und die Figur 1 gemeinsam zu betrachten. Figur 1 ist ein Schnitt durch die Figur 2 auf der Höhe des unteren Auslasses als Strömungsöffnung 9, die auf der Außenseite (für den Außenraum A) ankommt und dort in das Hohlprofil 6 führt, welches in Figur 1 ersichtlich ist. Auf der Raum-Innenseite, also dem Raum R ist die gegenüberliegende Öffnung 17 zu sehen, die aber nicht im gleichen Strömungskanal liegt. Die beiden Strömungskanäle verbinden vielmehr die obere äußere Öffnung 7 mit der inneren unteren Öffnung 17 und die untere äußere Öffnung mit der inneren, oberen Öffnung 19.

Ein Blick auf mögliche Führungen der beiden Strömungskanäle a,b mag hier angezeigt sein. Sie finden sich in den Figuren 6 und 7 für zwei Varianten 10,10' des Lüftungsgeräts. Beide dieser Varianten der Figuren 6 und 7 können in Figur 1 und 2 als dargestellt angesehen werden, da sie nach außen hin vergleichbar sind (außerhalb ihres Gehäuses 10a).

Die Einbaulage der Figur 2 zeigt, dass das Rahmen-Lüftungsgerät 10 mit seiner Längserstreckung L nach oben am vertikalen Abschnitt des Festrahmens platziert ist. Es wird dort "angedockt", was bedeutet, dass es in einem Streifenbereich 12a der großen Flachseite 12 an ein vertikales Stück der lateralen Stirnseite 2a des vertikalen Abschnitts des Blendrahmens 2 angefügt wird.

Dazu wird in das Mauerwerk 75, das außenseitig mit einer Fassade 70 verkleidet ist und innenseitig mit einer Wandfläche 80 verdeckt ist, eine Öffnung geschlagen, die aus der Figur 3 seitlich links ersichtlich ist. Diese Öffnung 76 gibt Raum für die Einbringung des Lüftungsgeräts 10 mit seinem Gehäuse 10a, das angedockt an dem Blendrahmen 2 die Strömungen an ihm vorbei leitet.

Der Blendrahmen 2 wird dadurch nicht durchbrochen, es werden keine seiner Leitungskanäle von Kunststoff- oder Metallprofilen verwendet. Es ist ebenso möglich, Holzprofile zu verwenden und eine Lüftung an dem Holzprofil des Fensters innerhalb des Mauerwerks 75, das im Weiteren auch als Laibung benannt wird, vorbeizuführen. Das dazu verwendete Andocken benennt, dass ein laterales Anlegen oder ein Anfügen gegeben ist. Es kann ein mechanischen Verklemmen durch Rastnasen und Rastnuten 14c, 14d angewendet werden, oder es kann eine zusätzliche Verschraubung stattfinden, die bestmöglich mit zwei Winkeln, oben und unten vorgenommen wird, die an die kurzen Stirnflächen 11a,11b des Lüftungsgeräts 10 angesetzt werden und an der lateralen Stirnseite 2a des Festrahmen angeschraubt werden. Schraub- oder Montageöffnungen sind in Figur 2 zu sehen, der Blendrahmen selbst nicht, nur sein Streifenbereich 2a, der die laterale Stirnseite darstellt.

Mit dem Andocken werden schlimmstenfalls nur Montagestellen in die laterale Stirnfläche des Festrahmens 2 eingebracht und wenn eine mechanische Verklemmung 14c,14d Anwendung findet, findet keine Verletzung statt, jedenfalls aber ist kein funktionstragendes Stück oder kein funktionstragender Abschnitt des Lüftungsgeräts 10 seitlich in den Blendrahmen eingelassen, um einen Teil von diesem oder seinem Raum einzunehmen.

Dadurch gewinnt das seitlich angedockte Lüftungsgerät an großer Versatilität für eine Vielzahl von Anwendungsbereichen. Es ist unabhängig von der Bauart des Fensters, namentlich des Festrahmens 2 und des Flügelrahmens 3. Es ist verdeckt eingebaut, weil es in die Laibung eingesetzt wird, und es ist leistungsfähig, weil es groß genug gebaut werden kann, die notwendigen Komponenten für einen energiebewussten Wärmetausch aufzunehmen.

Die Erstreckungen in Längsrichtung L, in Querrichtung Q und in Tiefenrichtung T, die in Figur 2 als Koordinatensysteme eingezeichnet sind, verhalten sich so, dass das Gerät eine große Länge L₁₀ besitzt, die sich in Höhenrichtung erstreckt. Es ist noch immer die Erstreckung in Höhenrichtung gering, relativ zur Höhe des Blendrahmens, was aus Figur 3 hervorgeht. In Querrichtung ist die Größe Q₁₀ des Geräts so definiert, das sie ein Stück nach außen über den Blendrahmen 2 hinausreicht und ein deutliches Stück auch nach innen über den Blendrahmen 2 hineinreicht. Der Blendrahmen ist in Figur 1 etwa mittig mit Blick auf die Laibung 75 gesetzt, bezogen auf die Querrichtung Q. In Tiefenrichtung T ist das Gerät 10 mit dem Maß T₁₀ als 'flach' zu benennen.

Die Erstreckung in Längsrichtung L ist bei dem Lüftungsgerät 10 am größten, verglichen mit den anderen Erstreckungsrichtungen in Q und T-Richtung.

Erläutert werden soll an Figur 2 die Flachseite 12, dies ist die Montageseite die zur Andockung führt, aber nicht das ganze Gerät, wie zuvor erläutert, wird an der Seite angedockt, vielmehr nur ein Streifenbereich 12a. Dieser Streifenabschnitt ist ein Abschnitt von zumindest drei Abschnitten, die auf der Flachseite 12 vorhanden sind.

Ein erster Streifen dient der Montage. Der Montagestreifen 12a hat notwendig die Breite (in Q-Richtung), die der Blendrahmen 2 in derselben Erstreckungsrichtung aufweist. Diese Richtung wird bei Blendrahmen der Flügel oft Tiefenrichtung genannt, die hier an anderer Stelle aufgegriffen werden soll. Es ist hier die Querrichtung, mit Blick auf das hauptsächlich beschriebene Lüftungsgerät 10.

Die Montage erfolgt entweder mit Winkeln 14a, 14b aus Figur 2 ersichtlich, oder mit Klemmstücken, die als 14c, 14d und weitere in Figur 1 ersichtlich sind. Sie "montieren" oder halten das Lüftungsgerät 10 beim Anliegen am Streifen 2a an dem Festrahmen 2. Die zusätzliche mechanische Befestigung kann mit den Winkeln 14a, 14b hinzutreten, oder die mechanische Verklemmung 14c, 14d fällt weg und es wird ausschließlich mit den Winkeln 14a, 14b montiert.

Hier sind alle beschriebenen Kombinationsmöglichkeiten und auch Individualmöglichkeiten für das Andocken möglich, bis hin zu einem bloßen Anliegen der beiden Streifenbereiche 12a, 2a.

Beidseitig dieses ersten Montagestreifens 12a sind zwei weitere Streifenbereiche 12b ,12c vorgesehen. Einer ist der äußere Streifenbereich 12b, in dem beide Außen-Strömungsöffnungen 9 und 7 gelegen sind. Diese sind räumlich beabstandet.

Im dargestellten Beispiel ist ganz oben eine Einströmöffnung 7 zu sehen und ganz unten eine Ausströmöffnung 9. Beide gehören nicht zum selben Strömungsweg, sondern bilden den Anfang bzw. das Ende jeweils eines eigenständigen Strömungswegs a bzw. b.

Der weiter innen liegende Streifen 12c ist im Beispiel der Rest der Flachseite 12. Er weist zumindest eine abnehmbare Platte 13 auf. Die Platte verdeckt, deshalb in Figur 2 nicht zu sehen, eine Öffnung, die als Revisionszugang zur Verfügung steht.

Bei abgenommener Platte 13 hat der Benutzer die Möglichkeit, das Innenleben des Lüftungsgeräts zu inspizieren und Teile oder Komponenten daraus herauszunehmen, Neue hereinzusetzen, oder herausgenommene Teile oder Komponenten zu reinigen und wieder einzusetzen. Auch funktionelle Schäden an der Elektronik oder den Lüftern können repariert werden. Der Revisionszugang ermöglicht generell die Wartung.

Der Deckel der Platte 13 sorgt für die Möglichkeit, dass ein Revisionszugang jedenfalls von der Raumseite R her möglich ist und das Gerät im Übrigen gänzlich verdeckt eingebaut ist. Es steht an keiner weiteren Stelle hervor, auch nicht beim Revisionszugang über den Deckel 13, der zusätzlich mit einer Abdeckung 18 (= Abdeckplatte) verdeckt ist, die in Figur 1 zu sehen ist und die anhand der Figur 2a näher erläutert wird.

Diese funktionelle Abdeckung 18 ist zuvor abzunehmen. Dann kann der erste Deckel 13 die Revisionsöffnung öffnen und die Wartung kann erfolgen.

Nachdem auf der Flachseite 12 auch zur Raumseite R hin zwei Lüftungsöffnungen 17 und 19 vorhanden sind, ist der Deckel 13 in Längsrichtung L verkürzt. Nachdem zwei Öffnungen vorhanden sind, ist er um zweimal die Größe der Öffnung in L-Richtung verkürzt gegenüber der Länge L₁₀ des Geräts in L-Richtung.

Die Öffnungen 17, 19 müssen aber nicht auf dieser Flachseite liegen, es können eine oder beide dieser Öffnungen auf der langen Stirnseite 11 gelegen sein, die auch zum Raum R hin operativ verwendet werden kann.

Das ist in der Figur 1 nicht vorgesehen, aber bei anderem Einbau des Geräts nach Figur 2 ebenso möglich. Die Wand 80 ist dann verkürzt, oder aber das Gerät ist so eingebaut, dass es mit seiner langen Stirnseite 11 bis auf die Oberfläche 80a der Innenwand 80 reicht.

Diese Platzierung des Geräts 10 ist aber nicht Grundlage des Baus, also des Gebäudes, sondern das Gerät muss sich später in einen schon bestehenden Bau einfügen, oder der Bau wird anders geplant, als das Lüftungsgerät an Größe zur Verfügung stellt. Es mag in Q-Richtung durchaus kleiner sein, größer ist wenig sinnvoll.

Dieser Ausgleich oder diese Kompensation soll anhand der Figur 2a erläutert werden.

Das Gerät selbst hat in Querrichtung Q eine bestimmt Erstreckung. Diese soll Q₁₀ genannt werden. Das Fenster mit seinem Blendrahmen 2 hat auch eine gewisse Erstreckung in dieser Q-Richtung, die hier Tiefe genannt wird. Diese Erstreckung ist im Beispiel T₂. Das Rollladenprofil, das als Hohlprofil 6 den zumindest einen vertikalen Kanal 6a (oder auch 6aa) aufweist und auch einen offenen Kanal 6b, der das Rollladenprofil (nicht eingezeichnet) führt, ist an der Außenseite des Blendrahmens 2 angesetzt, definiert also die äußere Randfläche, an der sich die Lage des Lüftungsgeräts 10 orientiert. Das ist die Oberkante oder die obere Fläche (in Tiefenrichtung des Blattes betrachtet in der Figur 2a). Von hier ausgehend bleibt ein Rest in der Querrichtung Q bestehen, der mit Tₖ benannt ist. Dieser Rest wird vom Gerät 10 mit Q₁₀ definiert, als verbleibender Rest aus der Q-Erstreckung des Profils 6, hier mit T₃ angegeben und hinzugefügt der Tiefe T₂ des Blendrahmens 2.

Der sichtseitige Deckel 18 wird auf diesen Rest Tₖ zugeschnitten, sodass er den "überstehenden Rest" und zwar den nach innen überstehenden Restabschnittes des Lüftungsgeräts 10 in Vertikalrichtung (und auch in Q-Richtung) abzudecken vermag. Dazu stößt der vordere Rand 18b des Deckels 18 an dem Blendrahmen 2 an.

Der Deckel kann dazu in verschiedener Breite zugeschnitten werden, so gemessen in Q-Richtung, wenn sich die Aufbauweise ändert, also entweder der Blendrahmen 2 zwischen seinen zugelassenen Maßen von 50mm bis 100mm sich verändert, oder aber das Rollladenprofil eine veränderte Tiefe T₃ besitzt. Es ergibt sich in jedem Fall ein veränderter Wert für Tₖ.

Das Gerät 10 ist aber jeweils als gleich mit Q₁₀ anzunehmen, sodass die Abmessung in Q-Richtung des Geräts 10 mit Q₁₀ unverändert bleibt, nicht aber Tₖ.

Ein in der Breite (in Querrichtung Q betrachtet) zugeschnittener Deckel 18 ermöglicht eine Kompensation, für viele verschiedene Anwendungsbereiche, ohne dass das Gerät 10 selbst angepasst werden muss.

In dem Deckel 18 ist zur Abdeckung der oberen Lüftungsöffnung 19 ein Lüftungsgitter 18a eingesetzt, das den Strömungsweg für ein Durchströmen öffnet, nicht aber für ein Hineinsehen öffnet.

Im Beispiel der Figur 6 und 7 wird über die Öffnung 19 die Raumluft angesaugt und nach außen transportiert, zur Strömungsöffnung 9 (Ausström-Strömungsöffnung, Fortluft). Zuvor wird sie durch den Wärmetauscher 20 geführt.

Soll das Gerät bedient werden, kann auf dieser Abdeckplatte (dem Sichtschutz oder der Deckplatte 18) eine Steuerung als "Kästchen" angeordnet werden, die in entweder Funk- oder direktem elektrischen Kontakt mit der Steuerung steht, die im Lüftungsgerät 10 angeordnet ist.

Eine andere Möglichkeit, diese Steuerung vorzusehen, ist das Anbringen der Steuerung am Gehäuse 10a des Lüftungsgeräts auf dessen Flachseite 12, im inneren Streifenbereich 12c, bevorzugt auf der abnehmbaren Platte 13, und dazu eine zugehörige Aussparung in der sichtseitigen Abdeckplatte 18 (= Deckel oder Deckplatte) zu lassen, sodass das deutlich kleinere Steuerungsmodul mit wenigen Tasten oder Knöpfen, zum Einschalten, Ausschalten oder eventuellem Einstellen einer Temperaturschwelle oder einer Zeit, von außen sichtbar und bedienbar ist.

Andere Arten der Positionierung sind auch gegeben, so auf der Innenwand 80 oder gänzlich frei über eine Funkstrecke oder eine optische Fernsteuerung. Die hier genannten Ausführungsmöglichkeiten sind so vielfältig, dass sie nicht in Summe aufgezählt werden können.

Die umschriebenen (vertikalen) Streifen 12a, 12b und 12c sind funktionell adaptiert, haben also nicht nur eine organisatorische oder logische Bedeutung. Ein Streifen ist für die Montage funktionell adaptiert, der äußere Streifen ist für die Strömungsöffnungen (zum Außenraum und vom Außenraum) funktionell adaptiert und der Innenstreifen ist zumindest für den Revisionszugang adaptiert, kann aber zusätzlich auch für die Lüftungsöffnung zum und vom Innenraum R funktionell adaptiert sein.

Daher werden die Streifen auch "Funktionsstreifen" genannt.

Der (vertikale) Abstand der kürzeren Schmalseiten 11a und 11b des Gehäuses 10a ist durch die Länge des Geräts L₁₀ gegeben.

Das Gerät 10 oder 10' hat eine Tiefe, die ins Mauerwerk 75 reicht und die mit T₁₀ definiert ist. Die dazu im Mauerwerk 75 eingebrachte Ausnehmung 76 ist an diese Tiefe angepasst, wobei die der Funktionsfläche 12 als Stirnfläche gegenüber liegende große Fläche an dem Boden der Ausnehmung 76 anliegen kann.

Die Breite des Geräts in Querrichtung, die dem Fenster in Tiefenrichtung entspricht (bezogen auf den Blendrahmen 2) ist mit Q₁₀ angegeben.

Das zugehörige Koordinatensystem L, T, Q ist in Figur 2 eingezeichnet.

Mit Blick auf die Anpassungsfähigkeit der Abdeckplatte 18, die eine Tiefenrichtung beim Flügel mit T in der Querrichtung Q dimensioniert wurden, soll nicht die T-Richtung aus Figur 2 umdefinieren. Es sind verschiedene T's.

Die Schmalseiten des Lüftungsgeräts 10 sind die langen Schmalseiten 11 und die kurzen Schmalseiten 11a, 11b, an denen die Winkelstücke 14a, 14b für eine mechanische Befestigung angeordnet werden.

Zu erwähnen sind noch Dichtungslagen 7a und 9a, welche die Strömungsöffnungen 7 und 9 am Austrittsort (also auf der Flachseite 12) umgeben, sodass diese an das Hohlprofil 6 oder 6' angekoppelt werden können, mit einer sich ergebenden lateralen Strömungsabdichtung.

Im Bespiel sind die Strömungsöffnungen 7 und 9 rechteckig (in L-Richtung länger), sodass auch die sie umgebenden Dichtungslagen rechteckig (aber umlaufend streifenförmig) ausgebildet sind. Bei einer anderen Form dieser Öffnungen, beispielsweise quadratisch oder oval, sind die Dichtungslagen entsprechend ausgebildet.

Günstig für eine große Strömungsfläche (oder Öffnungsfläche) ist die an die Form der großen Fläche 12 angepasste Rechteckform der Strömungsöffnungen 7 und 9. Dazuhin passen sie gut zu dem relativ schmalen Hohlprofil 6 oder 6', welches in Q-Richtung ein nur geringes Maß aufweist, dagegen in L-Richtung freigiebig ist.

Entsprechend dieser Form können auch die Koppelöffnungen im Hohlprofil sein, um Zutritt zu der inneren Kammer 6a zu erhalten.

Wesentlich größer sollten Öffnungen in dem außenliegenden Hohlprofil 6 nicht sein, um die Abdichtung der Dichtungslagen 7a und 9a zu ermöglichen, auch ist eine formgemäße Abstimmung der beiden Öffnungen im Lüftungsgerät und der beiden Öffnungen im Hohlprofil sinnvoll.

Damit ergibt sich nicht nur eine förmliche Anpassung für die Ankopplung auf den Außenraum A, sondern auch eine gut positionierte Anpassung an die Orte der Strömungsöffnung 7,9 im Lüftungsgerät 10 oder 10'.

Die dazu gesetzten Durchbrüche, um Zutritt zum inneren Kanal 6a zu erhalten (für die ausströmende Luft) und um Zutritt zum Lüftungsgerät 10 zu erhalten (für den einströmenden Lüftungsstrom), sind entsprechend den Maßen und den Positionen des Lüftungsgerätes zu wählen.

Im inneren Kanal 6a herrscht kein Kurzschluss, vielmehr ist zwischen dessen beiden Durchbrüchen im außenliegenden Hohlprofil ein Stopfen oder sinngemäß eine Blockade 8 zu setzen, wie sie aus den Figuren 5a, 5b hervorgeht. Die Durchbrüche in dem Hohlprofil haben kein gesondertes Bezugszeichen, vielmehr orientieren sie sich an der Ausströmöffnung 9 und der Einströmöffnung 7 im Außenstreifen 12b des Gehäuses 10a des Lüftungsgeräts 10 (oder 10').

In der Ausführung der Figuren 1 und 2 ist die Ansicht der Figur 3 hilfreich, die vom Innenraum R ausgesehen ist. Das große Fensterglas 3a bleibt erhalten, da das Lüftungsgerät 10 weder in den Rahmen des Fensters eingreift, noch erzwingt, dass das Fenster einen anderen Rahmen oder eine andere Abmessung haben muss, da es seitlich an bestehenden Rahmen vorbei die Luftführung vornimmt.

Die Sichtseite 80 ist die Innenwand, die aus der Papierfläche hervorsteht, weil das Lüftungsgerät 10 sowohl in Richtung zum Außenraum als auch in Richtung zum Innenraum gegenüber dem Blendrahmen 2 hervorsteht, was aus der Ansicht der Figur 1 deutlich wird, weggebrochen aus der Figur 3 aber ebenso.

Die Montagewinkel 14a, 14b werden in den Streifenbereichen montiert, wenn eine mechanische zusätzliche Befestigung gewünscht ist. Die beiden Streifen, der Montagestreifen 12a auf der großen Fläche 12 und der Streifen 2a als vertikaler Abschnitt des Blendrahmens 2 sind aufeinander gelegt, sozusagen "angedockt".

Die untere Schmalseite 11b und die obere Schmalseite 11a sind ebenso ersichtlich, wie der Einbau in die Wandvertiefung 76. Das Gehäuse 10a bestimmt die Abmessung der Ausnehmung.

Aus Figuren 4, 4a und 4b wird die Mitverwendung des Sims S näher ersichtlich. Dieser Sims ist auf der Außenseite im Außenraum A angeordnet und grenzt an den unteren Rand des horizontalen Abschnitts des Blendrahmens 2 an.

In der Ansicht der Figur 4, die einen Schnitt in der Höhe des angedockten Lüftungsgeräts 10 aus Figur 3 darstellt, durch die untere Ausströmöffnung 9, ist erkennbar, dass das Hohlprofil 6 eine vertikale Führung der Luft vornimmt. Die bestenfalls unten austretende Luft aus dem Lüftungsgerät 10 wird über zumindest einen Durchbruch im Hohlprofil 6 in dessen Kanal 6a oder weiter in einen dazu parallelen Innenkanal 6aa geleitet und nach unten weggeleitet. Mit austretendes Kondenswasser, das aufgrund des Wärmetauschs in der Luft mitgeführt wird und hier besonders stark anfällt, wird unmittelbar auf den Sims S abgeleitet und von dort in der üblichen Form weiter weggeleitet, wie normalerweise Regen von der Außenseite.

Die Einströmöffnung des Lüftungsgeräts 10 ist in Figur 4 nicht zu sehen, wird aber anhand der Figuren 5a und 5b näher erläutert. Übrige Komponenten der Figur 4 sind aus den vorhergehenden Figuren übernommen, mit Ausnahme des konkreten Einbaus in einer Wand als Gebäudewand, die hier die Außenseite A und die Innenseite R beinhaltet. "Außen" kann dabei auch ein Innenhof (Atrium) sein, es ist relativ zu betrachten, relativ zu Innen 'R', aber nicht absolut 'außen'.

'Außen' (= auf der, der Innenseite gegenüberliegenden Wandseite) ist eine Dämmschicht 72 aufgetragen, die von einer Fassaden-Putzschicht 70 überlagert ist. In keine dieser Sichtseiten mündet das Lüftungsgerät mit seiner Ausströmöffnung, vielmehr wird das Hohlprofil 6 zum Ausströmen verwendet und das Wasser läuft ohne Berührung der seitlichen Fassadenfläche auf den Sims S ab.

Das Mauerwerk 75 wird an der Stelle des Lüftungsgeräts 10 ausgenommen. Die Innenwand 80 ist bereits erklärt, sie kann eine Putzschicht sein, die auf der Größe des Abdeckdeckels 18 abgenommen ist (entsprechend der Größe L₁ und Tₖ aus Figuren 2a und 2.

Figur 4a geht in der Montage davon aus, dass keine Rollladenführung 6 vorhanden ist, also kein schon vorhandenes Hohlprofil im Außenraum mitverwendet werden kann. Es wird in dieser Anwendung ein gesondertes, eigenständiges Profil 6' gelegt, hier in einer Einbauart, bei der eine außenliegende Dämmung 71 verwendet wird, deren Fassaden-Oberschicht oder Außenschicht 71a ist. Das gesondert oder nachträglich gelegte Hohlprofil 6' kann entweder nur vertikal oder L-förmig nach Figur 5b mit 6', 6" oder als vollständiges umgekehrtes U verlegt werden, wenn auch der andere vertikale Abschnitt 6* mit verlegt ist (strichliniert dargestellt). In diese Bereiche können die realen Ausström-Öffnungen in den Außenraum platziert werden, sodass der Innenkanal 6a' des nachträglich verlegten Hohlprofils 6' als Strömungsführung dient.

Ein Blick zur Figur 5b mag das verdeutlichen. Der Innenkanal 6a' ist aus der Ausschnittsvergrößerung zu sehen (unten links), das Anflanschen des Lüftungsgeräts 10 über die Außen-Strömungsöffnungen 9 und 7 geschieht an die Durchbrüche des vertikal verlaufenden, nachträglich gelegten Hohlprofils 6' (keine Bezugszeichen), und zwischen diesen Durchbrüchen ist im Zuge Innern des Hohlprofils 6' ein strömungsdichter Stopfen 8 gesetzt, der einen Kurzschluss für die Strömung vermeidet.

Das in das Hohlprofil 6' übergeleitete Luftvolumen als ausströmend wird über die untere Durchbrechung 6d' in den Außenraum A abgegeben. Das aus dem inneren Kanal 6a' des äußeren Hohlprofils 6' aufgenommene Luftvolumen (über die Strömungsöffnung 7) kann von einer oder mehreren der als möglich eingezeichneten, nach außen reichenden Durchbrüche 6c', 6c" und 6"' übernommen werden. Diese sind in Figur 5b eingezeichnet.

Für die Figur 4 ergibt sich die Darstellung der Figur 5a. Hier ist auch ein Strömungs-Sperrstopfen 8 zwischen die beiden Strömungsöffnungen 7 und 9 im "wirksamen" Innenkanal des äußeren Rollladenprofils 6 (hier ist es der Innenkanal 6a und ein dazu paralleler Kanal 6aa) platziert. Der Rollladen ist nicht eingezeichnet, aber die beiden vertikalen Profilschienen sind ersichtlich, insbesondere ihre Querschnittsform aus der unteren, linken, vergrößerten Darstellung. Als Ausströmöffnung dient die untere Durchbrechung 6d und als Einströmöffnung die obere Durchbrechung 6c, die 90° im Winkel orientiert sind, gegenüber den Durchbrechungen, die zu den Strömungsöffnungen 7,9 des Lüftungsgeräts 10 führen. Diese können im Parallelkanal 6aa eingebracht sein, wenn Kanal 6a teilweise zugeputzt oder von außen abgedeckt ist.

Eine noch andere Gestaltung des Einbaus zeigt die Figur 4b. Hier sind keine Hohlprofile im Außenraum verfügbar, sodass ein Anschlussstutzen 9b verwendet wird, der die Strömungsöffnung 9 in Richtung senkrecht zur Flachseite 12 verlängert. Eine Luftströmung 9' wird dadurch erzeugt, die das Kondenswasser mitnimmt, dass auch auf dem Sims S auftropfen und ablaufen kann.

Die auf der Rauminnenseite R vorgesehenen Strömungsöffnungen sind 19 und 17, die einströmende (angesaugte) Luft auf der Innenseite ist 19'.

Ersichtlich in Figur 4b ist die Ausnehmung 76, in die das Lüftungsgerät 10 eingesetzt ist.

Eine Dämmplatte 73 mit Außenoberfläche 73a ist hier die Außenabdeckung, welche die Mauer 75 als Gebäudewand nach außen begrenzt. Sowohl in die Mauer, wie auch in die Dämmabdeckung ist die Ausnehmung 76 eingebracht, um das Gerät 10 in der Wand neben dem Blendrahmen, aber angedockt an den Blendrahmen zu platzieren.

Der Schnitt der Figur 4b ist tiefliegend auf einer Höhe der unteren Ausströmöffnung 9, verglichen mit Figur 2 und horizontal geschnitten.

Die Figur 4b lässt aufgrund der Lage ihres horizontalen Schnitts nur das untere Rohrstück 9b als Beispiel eines abstehenden Führungsstücks für die Luft und die kondensierende Feuchtigkeit erkennen. Ein höher liegender Schnitt würde zeigen, dass auch der oberen Strömungsöffnung 7, bei der die Außenluft angesaugt und dem ersten Strömungsweg a zugeführt wird, ein abstehendes Rohrstück 7b (in der Zeichnung nicht dargestellt) zugeordnet ist und hier die strichliniert dargestellte Strömungsrichtung der Luft stattfindet.

Auf der Rauminnenseite ist das entsprechend die hier austretende Luft 17' (gestrichelter Pfeil), die als Zuluft für den Raum bei einem Überkreuz verlaufenden Strömungsweg von a und b unten austritt, dagegen tritt oben die Abluft (AB) aus dem Raum in die Lüftungsöffnung 19 ein und wird über den Wärmetauscher 20 der auf der Außenseite vorgesehenen Strömungsöffnung 9 zugeführt (FO, Fortluft).

Die Nähe des unteren Auslasses zum Sims S ist nicht vollständig Null, sondern mit einem gewissen Abstand versehen, wie es auch Figur 3 entnommen werden kann.

Die Montage des Blendrahmens (des gesamten Fensters 2,3) hat meist am unteren Rand eine in die Laibung greifende Schraubbefestigung, sodass die Platzierung des Lüftungsgeräts 10 günstig etwas nach oben versetzt ist und der Abstand zum Sims von dem Stück des außenliegenden Hohlprofils überbrückt werden kann, das aber im Beispiel der Figur 4b gerade fehlt und deshalb nur durch ein Ablauf als Rohrstück kompensiert wird, dessen Auslaufende die Luft abgibt und auch die kondensierte Feuchtigkeit abtropfen lässt. Die Größenverhältnisse des Lüftungsgeräts 10 (oder 10') sind in allen dargestellten Figuren relativ zur Größe des Blendrahmens 2 (Festrahmen) ersichtlich und praktisch gleich. Der Festrahmen 2 kann eine variierende Tiefe, meist zwischen 50 mm und 100 mm besitzen, sodass insoweit Abweichungen entstehen, die aber die Größe des Geräts in Q-Richtung nicht verändert.

Zu sagen wäre, dass die geringste Erstreckung in Q-Richtung (Koordinatensystem aus Figur 2) das Außenprofil 6 oder 6' besitzt, soweit es vorhanden ist. Sogar kleiner oder weniger auftragend ist die Variante der Figur 4b, welche hier nur den Anschlussstutzen 9b (und 7b, nicht zeichnerisch dargestellt, weil oberhalb des Schnitts von Figur 4b) besitzt.

Bemessen an einer Relativbetrachtung ist das äußere Überstehen in Richtung des Außenraums also das geringste Maß. Den zweitgrößten Längenabschnitt in Q-Richtung nimmt der Blendrahmen ein oder, mit Blick auf das Lüftungsgerät betrachtet, der Montagestreifen 12a.

Der größte Abschnitt in Q-Richtung ist der nach innen ragende Abschnitt, der die Revisionsöffnung bereitstellt und der die Steuerung trägt und gegebenenfalls auch keine, eine oder zwei Lüftungsöffnungen für den Innenraum R trägt.

Dieser größte Abschnitt ist indes variabel, weil besonders der Blendrahmen in seiner Tiefe in Q-Richtung bei verschiedenen Einbauorten und bei verschiedenen Profilarten eine Schwankungsbreite besitzt. Kompensiert wird diese Schwankung mit dem in der Breite (in Q-Richtung gesehen) veränderten Deckel 18, der mit seiner "Frontseite" oder "Frontkante" 18b an dem Blendrahmen anliegt, und das Gerät, soweit es eben nach innen übersteht, sichtseitig abdeckt. Dies oberhalb des (über dem) Revisionsdeckel(s) 13.

Das Verhältnis ist in absoluten Größenmaßen schwer anzugeben, kann aber in relativen Längenmaßen angegeben werden: Verglichen mit der Tiefe (in Q-Richtung) des Blendrahmens ist der äußere Überstand der kleinste und der größere Überstand ist der nach innen reichende Überstand.

In den Figuren ist das Innenleben unter den Streifen bei ganz geöffnetem Lüftungsgerät zu sehen. Normal ist im Einbauzustand nur der Bereich des geöffneten Deckels 13 aus Figur 2 im Funktionsstreifen 12c zugänglich. Durch und über diese freigelegte Öffnung hat die Wartung zu erfolgen. Das betrifft alle Komponenten.

Figur 6 zeigt eine erste Ausführungsform eines (ganz) geöffneten Lüftungsgeräts 10', wobei der Wärmetauscher 20 im Zentrum des Gehäuses 10a so eingebaut ist, dass er für einen Parallelstrom-Betrieb vorbereitet ist. Für ein Gegenstrom-Prinzip ist die Anordnung des Wärmetauschers 20 in der anderen Ausführungsform der Figur 7 vorgesehen. Das Lüftungsgerät 10 hat abgewandelte Strömungskanäle a, b, die konkret ein wenig anders verlaufen (stärker gekrümmt beim Einlauf/Auslauf am Wärmetauscher 20), die aber funktionell auch zwei eigenständige Strömungskanäle sind, die alle zum Wärmetauscher führen, und dort ihren Luftstrom auf verschiedene Lagen oder Ebenen des Wärmetauschers verteilen, so dass sie eigenständig bleiben.

Eingezeichnet in beiden Varianten ist die Lage der drei Funktionsstreifen 12a (Montagestreifen), 12b (Außenstreifen) und 12c (Innenstreifen).

Der Deckel 13, der aus Figur 2 ersichtlich ist, liegt in der Mitte des Innenstreifens, zwischen den beiden Lüftungsöffnungen 19 und 17, ist also gegenüber der Länge L₁₀ verkürzt. Der Deckel 13 ist in Figuren 6, 5 nicht eingezeichnet, aber aus Figur 2 dorthin übertragbar, mit der Relativanordnung der Streifen 12c, 12a.

Im eingebauten Zustand jedes der Geräte 10' und 10 ist durch den geöffneten Deckel 13 nicht alles zu ersehen, was durch hier gewählte vollständige Öffnung der Frontseite bildlich dargestellt ist. Es ist nur das unmittelbar und direkt sichtbar, was unter der abgenommenen Platte 13 zur Freilegung der Revisionsöffnung sichtbar ist.

Für das Beispiel der Figur 5 ist das eine vertikal eingeschobene Platine 51, das Netzteil 51a, eine Tasche 60, die trapezartig ausgestaltet ist und oben und unten zwei schräg gestellte Wände der linken Äste der Luftführungen definiert. Sie stößt stirnseitig an den Wärmetauscher 20 an und ist über die Revisionsöffnung zugänglich.

Sichtbar ist auch der Filtereinsatz 31b, der in Strömungsrichtung danach angeordnete Lüfter 30b und unten im anderen Strömungskanal "a" der Axiallüfter 30a. Dies alles bei abgenommener Platte 13.

Der Wärmetauscher 20 ist ersichtlich nur in einem vorderen Abschnitt unmittelbar zu ergreifen, der Großteil des Wärmetauschers liegt unter dem Montagestreifen 12a. Dieser ist eingebaut neben dem Blendrahmen und nicht unmittelbar zugänglich, sondern nur dadurch zugänglich, dass der Benutzer an dem sichtbaren, direkt zugänglichen Abschnitt des Wärmetauschers 20, durch die Revisionsöffnung greifend anzufassen vermag.

Anders geometrisch gestaltet ist das Beispiel der Figur 5. Hier ist der Wärmetauscher mit seiner Haupt-Erstreckungsrichtung in Querrichtung Q vorgesehen. Zu den drei Richtungen L, Q und T wird auf das Koordinatensystem der Figur 2 verwiesen.

Ebenfalls in Figur 7 anders platziert als in Figur 6 ist das Netzteil 51a. Es ist in eine Tasche 51b eingeschoben, die im Bild unterhalb des Wärmetauschers 20 liegt. Die obere Wand des Netzteils 51a, dort mit 51a' benannt, bildet eine Führung 42c für eine Seite des sechseckigen Wärmetauschers 20.

Im Gegenstrom-Prinzip und im Gegenstrom-Einbau sind die längeren Führungen 42a, 42c oben und unten und zwei kurze Führungen oder Anschläge 42b und 42d sind links und rechts. Sie sind strömungsdicht, weil an ihnen beide Strömungskanäle mit ihren Armen angrenzen, die hier in den Wärmetauscher münden.

Generell gesprochen, sind die Strömungskanäle a, b in beiden Ausführungen 10, 10' X-förmig, haben vier Arme (oder: Äste), aber funktionell sind es zwei eigenständige Strömungskanäle, die sich im Wärmetauscher 20 treffen. Die konkrete Bahnführung ist an das Tauscherprinzip angepasst, was deutlich aus den beiden Varianten der Figuren 6, 7 hervorgeht.

Die von außen einströmende Luft AU wird vom Lüfter 30a durch den Wärmetauscher 20 angesaugt, und der Lüftungsöffnung 17 als ZU zugeführt. Im äußeren Arm zwischen Wärmetauscher 20 und äußerer Einströmöffnung 7 ist ein weiterer Filter als Filterplatte 31a vorgesehen.

Der andere Strömungskanal b nimmt Luft AB aus dem Innenraum durch die Lüftungsöffnung 19 auf, diese führt erst über den ersten Filter 31b, angesaugt von dem zugehörigen Axiallüfter 30b. Von diesem Arm des Strömungskanals ausgehend wird der Wärmetauscher mit der strömenden Luft beaufschlagt, die am gegenüberliegenden unteren, rechten Arm austritt und der Strömungsöffnung 9 zugeführt wird, welche die Fortluft FO in den Außenraum abgibt.

Die Positionierung der verschiedenen betrieblichen Komponenten, die hier erläutert worden sind, soweit sie im Innenraum des Gehäuses 10a platziert werden und für die Funktionen des Lüftungsgeräts notwendig sind, wird in den folgenden Figuren, auch unter Zuhilfenahme der Figuren 6 und 7 erläutert, jeweils für eine austauschbare Komponente eigenständig.

Alle beliebigen Kombinationen der beschriebenen Komponenten mit ihren zugehörigen Führungen sind möglich und sollen als eigene Ausführungsbeispiele angesehen werden, wenngleich sie hier an einer einzigen bildlichen Darstellung der Figur 8, unter Zuhilfenahme der Ausschnittsvergrößerung der Figur 9 und mit Blick auf ganz geöffnete Geräte der Figur 6 oder 7 gezeigt sind.

## Patentansprüche

1. Lüftungsgerät für ein Andocken an einen Rahmen (2) eines Fensters oder einer Tür, das Gerät
(a) mit einem Gehäuse (10a), das eine größere Erstreckung in Längsrichtung (L) als übrige Erstreckungen in Quer- und Tiefenrichtung (Q, T) aufweist;
(b) mit einer Flachseite (12) des Gehäuses, die in zumindest drei funktionelle Streifenabschnitte aufgeteilt ist, wobei
(ba) ein erster Streifenabschnitt (12a) als Montagestreifen für eine seitliche Stirnfläche (2a) des Festrahmens (2) vorgesehen und dazu ausgebildet ist;
(bb) beidseits davon je ein weiterer Funktionsstreifen (12b,12c) auf der Flachseite (12) des Gehäuses vorgesehen ist,
- wobei in einem davon als Außenstreifen (12b) zwei beabstandete Strömungsöffnungen (7,9) vorgesehen sind,
- wobei im verbliebenen Funktionsstreifen (12c) als Innenstreifen eine abnehmbare Platte (13) als Abdeckung eines Revisionszugangs vorgesehen ist;
(c) mit im Gehäuse (10a) ausgebildeten zwei Strömungskanälen (a, b), welche beide durch einen Wärmetauscher (20) verlaufen und jeder Strömungskanal einen Lüfter (30a, 30b) aufweist.

2. Lüftungsgerät nach Anspruch 1, wobei entlang des Innenstreifens (12c) zumindest eine Lüftungsöffnung (17) angeordnet ist.

3. Lüftungsgerät nach Anspruch 2, wobei im Innenstreifen (12c) eine weitere Lüftungsöffnung (19) angeordnet ist.

4. Lüftungsgerät nach Anspruch 2 oder 3, wobei die abnehmbare Platte (13) in Längsrichtung (L) um ein Maß verkürzt ist, das der Anzahl und Länge der im Innenstreifen (12c) angeordneten Lüftungsöffnungen (17,19) entspricht.

5. Lüftungsgerät nach Anspruch 1 oder 2, wobei zumindest eine Lüftungsöffnung (17,19) für den oder im Innenraum (R) auf einer zur Flachseite (12) senkrecht verlaufenden Schmalseite (11) des Gehäuses (10a) oder des Lüftungsgeräts (10) austritt.

6. Lüftungsgerät nach einem der vorigen Ansprüche, wobei die durch den Wärmetauscher (20) verlaufenden Strömungskanäle (a, b) ausgebildet sind, Luft im Gegenstrom durch den Wärmetauscher zu führen.

7. Lüftungsgerät nach Anspruch 1, wobei zumindest ein Winkelstück (14a, 14b) vorgesehen ist, welches auf der oberen oder unteren Schmalseite (11a, 11b) anbringbar ist, zur Montage an der Schmalseite (2a) des Festrahmens (2).

8. Lüftungsgerät nach einem der vorigen Ansprüche, wobei die Strömungsöffnungen (9, 7) im Außenstreifen (12b) jeweils von einem Dichtgummi umgeben sind (9a, 7a), zum Ankoppeln an ein vertikal verlaufendes Hohlprofil (6, 6') auf der Außenseite (A), wobei das Hohlprofil einen durchlaufenden inneren Kanal (6a) aufweist, der zur Luftführung verwendet wird oder verwendbar ist.

9. Lüftungsgerät nach einem der Ansprüche 1 bis 7, wobei abstehende Führungsstücke (9b) die zwei Strömungsöffnungen (7, 9) verlängern, in einer Richtung senkrecht zur Flachseite (12), soweit kein vertikales Hohlprofil (6) vorhanden ist.

10. Lüftungsgerät für ein Andocken an einen Rahmen (2) eines Fensters oder einer Tür, ohne in den Rahmen einzugreifen, das Lüftungsgerät (10)
- mit einem Gehäuse (10a);
- mit in dem Gehäuse (10a) ausgebildeten zwei Strömungskanälen (a, b), welche beide durch einen Wärmetauscher (20) verlaufen und jeder Strömungskanal einen Lüfter (30a, 30b) aufweist;
- mit einer Flachseite (12) des Gehäuses (10a), die drei funktionelle Streifenabschnitte aufweist, wobei der erste Streifenabschnitt (12a) als Montagestreifen für eine seitliche Stirnfläche (2a) des Festrahmens (2) vorgesehen und dazu ausgebildet ist, der zweite Funktionsstreifen (12b) als Außenstreifen (12b) zwei räumlich beabstandete Strömungsöffnungen (7,9) aufweist und der dritte Funktionsstreifen (12c) als Innenstreifen eine abnehmbare Platte (13) als Abdeckung einer Revisionsöffnung aufweist.

11. Lüftungsgerät nach Anspruch 10, wobei entlang des Innenstreifens (12c) zumindest eine oder zwei Lüftungsöffnungen (17,19) angeordnet ist.

12. Lüftungsgerät nach Anspruch 10 oder 11, wobei die durch den Wärmetauscher (20) verlaufenden Strömungskanäle (a, b) ausgebildet sind, Luft im Gegenstrom durch den Wärmetauscher zu führen.

13. Lüftungsgerät nach Anspruch 10, wobei beide Lüfter (30a, 30b) unter der abnehmbaren Platte (13) angeordnet sind und unter dem funktionellen Innenstreifen (12c).

14. Lüftungsgerät nach Anspruch 10 oder 13, wobei eine elektronische oder elektrische Steuerung (51) außerhalb der Strömungswege (a, b), aber unter der abnehmbaren Platte (13) unter dem Innenstreifen (12c) angeordnet ist.

## Claims

1. A ventilation device for docking onto a frame (2) of a window or a door, the device comprising
(a) a housing (10a) which has a greater extension in the longitudinal direction (L) than the other extensions the transverse and depth direction (Q, T);
(b) a flat side (12) of the housing which is divided into at least three functional strip sections, wherein
(ba) a first strip section (12a) is provided as a mounting strip for a lateral front surface (2a) of the fixed frame (2) and is formed for this purpose;
(bb) a respective additional functional strip (12b, 12c) is provided on either side thereof on the flat side (12) of the housing;
- wherein two flow openings (7, 9) arranged at a distance from each other are provided in one of the functional strips acting as the outer strip (12b);
- wherein in the remaining functional strip (12c), as an inner strip, a removable plate (13) for covering a service access is provided;
(c) comprising two flow channels (a, b) which are formed in the housing (10a) and which both extend through a heat exchanger (20) and each flow channel comprises a fan (30a, 30b).

2. A ventilation device according to claim 1, wherein at least one ventilation opening (17) is arranged along the inner strip (12c).

3. A ventilation device according to claim 2, wherein a further ventilation opening (19) is arranged in the inner strip (12c).

4. A ventilation device according to claim 2 or 3, wherein the removable plate (13) is reduced in the longitudinal direction (L) by an amount which corresponds to the number and length of the ventilation openings (17, 19) arranged in the inner strip (12c).

5. A ventilation device according to claim 1 or 2, wherein at least one ventilation opening (17, 19) for the or in the interior space (R) exits on a narrow side (11) of the housing (10a) or ventilation device (10) which extends perpendicularly to the flat side (12).

6. A ventilation device according to one of the preceding claims, wherein the flow channels (a, b) extending through the heat exchanger (20) are formed to guide the air in counterflow through the heat exchanger.

7. A ventilation device according to claim 1, wherein at least one angle piece (14a, 14b) is provided which can be attached to the upper or bottom narrow side (11 a, 11 b), for the purpose of mounting on the narrow side (2a) of the fixed frame (2).

8. A ventilation device according to one of the preceding claims, wherein the flow openings (9, 7) in the outer strip (12b) are respectively surrounded by a sealing rubber (9a, 7a), for the purpose of coupling to a vertically extending hollow profile (6, 6') on the exterior side (A), wherein the hollow profile comprises a continuous inner channel (6a) which is or can be used for guiding air.

9. A ventilation device according to one of the claims 1 to 7, wherein protruding guide pieces (9b) extend the two flow openings (7, 9), in a direction perpendicularly to the flat side (12), in so far as no vertical hollow profile (6) is present.

10. A ventilation device for docking to a frame (2) of a window or a door, without engaging in the frame, the ventilation device (10)
- having a housing (10a);
- having two flow channels (a, b) formed in the housing (10a), which both extend through a heat exchanger (20) and each flow channel comprises a fan (30a, 30b);
- having a flat side (12) of the housing (10a) which comprises three functional strip sections, wherein the first strip section (12a is provided and formed as a mounting strip for a lateral front surface (2a) of the fixed frame (2), the second functional strip (12b) is formed as an outer strip (12b) and comprises two spatially spaced flow openings (7, 9), and the third functional strip (12c) is formed as an inner strip and comprises a removable plate (13) as a cover of a service opening.

11. A ventilation device according to claim 10, wherein at least one or two ventilation openings (17, 19) are arranged along the inner strip (12c).

12. A ventilation device according to claim 10 or 11, wherein the flow channels (a, b) which extend through the heat exchanger (20) are formed to guide air in counterflow through the heat exchanger.

13. A ventilation device according to claim 10, wherein both fans (30a, 30b) are arranged beneath the removable plate (13) and beneath the functional inner strip (12c).

14. A ventilation device according to claim 10 or 13, wherein an electronic or electrical controller (51) is arranged outside of the flow paths (a, b), but beneath the removable plate (13) under the inner strip (12c).

## Revendications

1. Appareil de ventilation destiné à être amarré à un châssis (2) d'une fenêtre ou d'une porte, cet appareil :
(a) comprenant un boîtier (10a) dont l'extension en direction longitudinale (L) est plus grande que les autres extensions en direction transversale et en profondeur (Q, T),
(b) un côté plat (12) du boîtier étant subdivisé en au moins trois segments de bande fonctionnels,
(ba) un premier segment de bande fonctionnel (12a) étant prévu en tant que bande de montage pour une face frontale latérale (2a) du châssis dormant (2) et étant réalisé à cet effet,
(bb) de chaque côté de ce premier segment, une autre bande fonctionnelle (12b, 12c) étant respectivement prévue sur la face plane (12) du boîtier,
dans l'une de ces bandes constituant une bande externe (12b), deux ouvertures d'écoulement (7, 9) situées à distance l'une de l'autre étant prévues,
dans la bande fonctionnelle restante (12c) constituant une bande interne, une plaque amovible (13) constituant un recouvrement d'un accès de contrôle,
(c) dans le boîtier (10a) étant réalisés deux canaux d'écoulement (a, b) qui passent tous les deux au travers d'un échangeur de chaleur (20) et chaque canal d'écoulement comprenant un ventilateur (30a, 30b).

2. Appareil de ventilation conforme à la revendication 1,
dans lequel au moins une ouverture de ventilation (17) est installée le long de la bande interne (12c).

3. Appareil de ventilation conforme à la revendication 2,
dans lequel une autre ouverture de ventilation (19) est installée dans la bande interne (12c).

4. Appareil de ventilation conforme à la revendication 2 ou 3,
dans lequel la plaque amovible (13) est raccourcie en direction longitudinale (L) d'une longueur qui correspond au nombre et à la longueur des ouvertures de ventilation (17, 19) installées dans la bande interne (12c).

5. Appareil de ventilation conforme à la revendication 1 ou 2,
dans lequel au moins une ouverture de ventilation (17, 19) du volume interne (R) ou de celui-ci ressort sur un petit côté (11) du boîtier (10a) ou de l'appareil de ventilation (10) s'étendant perpendiculairement à la face plane (12).

6. Appareil de ventilation conforme à l'une des revendications précédentes,
dans lequel les canaux d'écoulement (a, b) passant au travers de l'échangeur de chaleur (20) sont réalisés pour guider l'air en contre courant au travers de l'échangeur de chaleur.

7. Appareil de ventilation conforme à la revendication 1 dans lequel
il est prévu au moins une pièce en équerre (14a, 14b) pouvant être installée sur le petit côté supérieur ou sur le petit côté inférieur (11a, 11b) pour permettre le montage sur le petit côté (2a) du châssis dormant (2).

8. Appareil de ventilation conforme à l'une des revendications précédentes,
dans lequel les ouvertures d'écoulement (9, 7) de la bande externe (12b) sont respectivement entourées d'un caoutchouc d'étanchéité (9a, 7a) pour permettre leur accouplement sur un profilé creux (6, 6') s'étendant verticalement sur la face externe (A), ce profilé creux comportant un canal interne traversant (6a) utilisé ou pouvant être utilisé pour le guidage de l'air.

9. Appareil de ventilation conforme à l'une des revendications 1 à 7, dans lequel des pièces de guidage écartées (9b) prolongent les deux ouvertures d'écoulement (7, 9) dans une direction perpendiculaire à la face plane (12) dans la mesure où aucun profilé creux vertical (6) n'est prévu.

10. Appareil de ventilation destiné à être amarré à un châssis (2) d'une fenêtre ou d'une porte sans pénétrer dans ce châssis, cet appareil de ventilation (10) comprenant :
- un boîtier (10a),
- deux canaux d'écoulement (a, b) formés dans ce boîtier qui passent tous les deux au travers d'un échangeur de chaleur (20), chaque canal d'écoulement comprenant un ventilateur (30a, 30b),
- une face plane (12) du boîtier (10a) comprenant trois segments de bandes fonctionnels, le premier segment de bande fonctionnel (12a) constituant une bande de montage pour une face frontale latérale (2a) du châssis dormant (2) et étant réalisé à cet effet, la seconde bande fonctionnelle (12b) constituant une bande externe (12b) et comprenant deux ouvertures d'écoulement (7, 9) situées à distance l'une de l'autre, et la troisième bande fonctionnelle (12c) constituant une bande interne et comprenant une plaque amovible (13) constituant un recouvrement d'une ouverture de contrôle.

11. Appareil de ventilation conforme à la revendication 10,
dans lequel au moins une ou deux ouvertures de ventilation (17, 19) est(sont) située(s) le long de la bande interne (12c).

12. Appareil de ventilation conforme à la revendication 10 ou 11,
dans lequel les canaux d'écoulement (a, b) passant au travers de l'échangeur de chaleur (20) sont réalisés pour guider l'air en contre-courant au travers de l'échangeur de chaleur.

13. Appareil d'aération conforme à la revendication 10,
dans lequel les deux ventilateurs (30a, 30b) sont montés au-dessous de la plaque amovible (13) et au-dessous de la bande fonctionnelle interne (12c).

14. Appareil de ventilation conforme à la revendication 10 ou 13, dans lequel un organe de commande électronique ou électrique (51) est monté sous la bande interne (12c) à l'extérieur des canaux d'écoulement (a, b) mais au-dessous de la plaque amovible (13).
